(19) Europäisches Patentamt
European Patent Office
Office européen des brevets

(11) **EP 3 699 791 B1**

(12) **EUROPÄISCHE PATENTSCHRIFT**

(45) Veröffentlichungstag und Bekanntmachung des Hinweises auf die Patenterteilung:
**05.10.2022 Patentblatt 2022/40**

(21) Anmeldenummer: **20163127.2**

(22) Anmeldetag: **09.05.2017**

(51) Internationale Patentklassifikation (IPC):
**H04L 9/40** (2022.01)    **G06F 21/34** (2013.01)
**H04L 9/32** (2006.01)    **H04L 9/08** (2006.01)

(52) Gemeinsame Patentklassifikation (CPC):
**H04L 63/0823; G06F 21/33; G06F 21/34;**
**H04L 9/088; H04L 9/3271; H04L 63/10;**
G06F 2221/2115; H04L 63/0884

(54) **ZUGANGSKONTROLLE MIT EINEM MOBILFUNKGERÄT**

ACCESS CONTROL WITH A MOBILE RADIO DEVICE

CONTRÔLE D'ACCÈS COMPRENANT UN APPAREIL RADIO MOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.05.2016 DE 102016208512**

(43) Veröffentlichungstag der Anmeldung:
**26.08.2020 Patentblatt 2020/35**

(62) Dokumentnummer(n) der früheren Anmeldung(en) nach Art. 76 EPÜ:
**17170148.5 / 3 246 839**

(73) Patentinhaber: **Bundesdruckerei GmbH**
**10969 Berlin (DE)**

(72) Erfinder: **MORGNER, Frank**
**15537 Grünheide (DE)**

(74) Vertreter: **Richardt Patentanwälte PartG mbB**
**Wilhelmstraße 7**
**65185 Wiesbaden (DE)**

(56) Entgegenhaltungen:
DE-A1-102014 204 252

• **Moritz Horsch: "Mobile Authentisierung mit dem neuen Personalausweis (MONA) Mobile authentication using the new German identity card", Master Thesis , 31. Juli 2011 (2011-07-31), XP055177866, Gefunden im Internet: URL:https://www.cdc.informatik.tu-darmstad t.de/mona/pubs/201107_MA_Mobile Authentisierung mit dem neuen Personalausweis (MONA).pdf [gefunden am 2015-03-19]**

• **Bundesamt für Sicherheit in der Informationstechnik: "Advanced Security Mechanisms for Machine Readable Travel Documents and eIDAS Token - Part 2", , 16. Dezember 2014 (2014-12-16), XP055257174, Gefunden im Internet: URL:https://www.bsi.bund.de/DE/Publikation en/TechnischeRichtlinien/technischerichtli nien_node.html [gefunden am 2016-03-10]**

• **Bundesamt Für Sicherheit In Der Informationstechnik: "Advanced Security Mechanisms for Machine Readable Travel Documents and eIDAS Token -", , Bd. TR-03110-1, Nr. v.2.20 26. Februar 2015 (2015-02-26), XP055405723, Gefunden im Internet: URL:https://www.bsi.bund.de/SharedDocs/Dow nloads/EN/BSI/Publications/TechGuidelines/ TR03110/BSI_TR-03110_Part-1_V2-2.pdf;jsess ionid=FF42AA8C4919811DCD1B35A930658BE6. 2_c id351?__blob=publicationFile&v=1 [gefunden am 2017-09-12]**

• **TAMRAKAR SANDEEP ET AL: "Can Hand-Held Computers Still Be Better Smart Cards?", 13. Dezember 2010 (2010-12-13), INTERNATIONAL CONFERENCE ON FINANCIAL CRYPTOGRAPHY AND DATA SECURITY; [LECTURE NOTES IN COMPUTER SCIENCE; LECT.NOTES COMPUTER], SPRINGER, BERLIN, HEIDELBERG, PAGE(S) 200 - 218, XP047375814, ISBN: 978-3-642-17318-9 * Abstract, Fig. 1, Abschnitt 3.2, Abschnitt 4, Fig. 4 ***

**Beschreibung**

Die Erfindung betrifft ein Verfahren zur Zugriffskontrolle, ein System zur Zugriffskontrolle, ein Verfahren zur Freigabe eines Zugriffs auf eine zugriffsbeschränkte Sicherungseinrichtung sowie ein Sicherheitssystem.

Die vorliegende Patentanmeldung ist eine Teilanmeldung zur Stammanmeldung EP 17 170 148.5, deren Offenbarungsgehalt vollumfänglich zum Gegenstand der vorliegenden Teilanmeldung gemacht wird.

Sicherungseinrichtungen, beispielsweise Alarmanlagen oder Verriegelungsanlagen, haben sowohl im privaten als auch im gewerblichen Umfeld eine hohe Verbreitung gefunden. Sicherungseinrichtungen dienen beispielsweise dazu, ausschließlich einem vordefinierten Personenkreis Zutritt zu einem Gebäude oder einem Gebäudeteil zu ermöglichen. Damit eine bestimmte Person Zutritt zur Sicherungseinrichtung bekommt, ist eine Authentifizierung der Person gegenüber der Sicherungseinrichtung erforderlich. Die Authentifizierung der Person kann beispielsweise mittels Passworteingabe oder Erfassung biometrischer Merkmale über ein Terminal oder mittels einer Berechtigungskarte, die Daten mit dem Terminal austauscht, erfolgen.

Vorbekannte Authentifizierungsverfahren weisen den Nachteil auf, dass zur Eingabe des Passworts, zum Erfassen biometrischer Merkmale oder zum sicheren Datenaustausch zwischen Berechtigungskarte, Terminal und weiteren Komponenten oftmals einiges an Zeit erforderlich ist. Entsprechende Authentifizierungsprozesse können mehrere Sekunden, teilweise Minuten erfordern. Dadurch können beispielsweise Warteschlangen am Eingangsbereich von Gebäuden oder Gebäudeteilen entstehen. Vorbekannte Ansätze diese Verfahren zu beschleunigen, gehen in der Regel mit einer Verringerung der Sicherheit einher.

Ein weiterer Nachteil bei bekannten Sicherungseinrichtungen ist, dass die Verwaltung der Zugriffsberechtigungen einer Vielzahl von Nutzern komplex ist. Dies gilt auch für die Verwaltung einer Vielzahl von Terminals, die beispielsweise zur Sicherung eines Gebäudes notwendig sind. Jedes Terminal muss so konfiguriert sein und über entsprechende kryptographische Daten verfügen, dass eine sichere Authentifizierung gewährleistet wird. Eine dezentrale Struktur mit einer Vielzahl autarker Terminals führt zu einem erheblichen Wartungsaufwand, wenn beispielsweise Einstellungen und/oder Daten geändert werden müssen. Eine zentrale Steuerung der Authentifizierungsprozesse über eine Netzwerkanbindung des Terminals wiederum kann erhebliche Latenzzeiten verursachen durch das Ausführen komplexer und/oder umfangreicher Kommunikationsprozesse über das Netzwerk.

Die Master-Thesis "Mobile Authentisierung mit dem neuen Personalausweis (MONA)" von Moritz Horsch, Technische Universität Darmstadt, Juli 2011, beschreibt eine mobile Authentisierung mit dem einem Personalausweis unter Verwendung eines Mobilfunkgerät mit Near Field Communication Technologie und mobiler eID-Anwendung verwendet, welches Computer und über die NFC-Schnittstelle Kartenleser-Funktionalität klassischer stationärer eID-Szenarien vereint.

Die technischen Richtlinien des Bundesamtes für Sicherheit in der Informationstechnik "Advanced Security Mechanisms for Machine Readable Travel Documents and eIDAS Token", Teil 1 (TR-03110-1) und Teil 2 (TR-03110-2), Version 2.20, beschreiben elektronischen Sicherheitsmechanismen für elektronische Reisedokumente zum Schutz von Authentizität (einschließlich Integrität), Originalität und Vertraulichkeit der Daten zu schützen, die auf einem in dem elektronischen Reisedokument eingebetteten Hochfrequenzchip gespeichert sind.

Die DE 10 2014 204252 A1 beschreibt ein computerimplementiertes Verfahren zur Kontrolle des Zugriffs eines Nutzers zu einer Sicherungsanlage, wobei ein Identitätsdokument des Nutzers eine elektronische Identifikation beinhaltet. Das Verfahren umfasst einen Empfang einer Erlaubnisanfrage zum Zugriff des Nutzers auf die Sicherungsanlage, auf den Empfang der Erlaubnisanfrage, eine Prüfung, ob ein erster Vertrauensanker in einem ersten Speicher vorliegt, und/oder ob ein zweiter Vertrauensanker in einem zweiten Speicher vorliegt, falls die Vertrauensanker gespeichert vorliegen, eine Verwendung derselben zur gegenseitigen Authentifizierung einer Kontrolleinheit und des Identitätsdokuments, im Falle der erfolgreichen gegenseitigen Authentifizierung des Identitätsdokuments und der Kontrolleinheit, eine Übermittlung der in elektronischen Identifikation an einen Autorisierungsserver, falls der erste und/oder der zweite Vertrauensanker nicht gespeichert vorliegt, eine Veranlassung eines Authentifizierungsservers, den ersten und/oder den zweiten Vertrauensanker zu erzeugen, und eine Übermittlung oder Ermöglichung der Übermittlung der in dem Identitätsdokument gespeicherten elektronischen Identifikation des Nutzers an den Autorisierungsserver durch den Authentifizierungsserver sowie eine Gewährung oder Verweigerung des Zugriffs auf die Sicherungsanlage in Abhängigkeit von der übermittelten elektronischen Identifikation durch den Autorisierungsserver.

Der Artikel "Can Hand-Held Computers Still Be Better Smart Cards?" von Sandeep Tamrakar et al., INTRUST 2010, LNCS 6802, 2011, Seiten 200-218, beschreibt Implementierungen einer Architektur, bei der eine Trusted Execution Environment (TrEE) in einem Smartphone als Sicherheitsgrundlage für die Implementierung von Sicherheitsmodulen verwendet wird, die auf dem Smartcard-Standard ISO/IEC 7816 basieren. Die Smartphone-Software emuliert sowohl den Smartcard-Leser als auch die Karte, weshalb auf dem Host keine neuen Treiber benötigt werden, um die Smartcard-Emulation verwenden zu können.

Der Erfindung liegt die Aufgabe zugrunde, ein verbessertes Verfahren zur Kontrolle des Zugriffs auf ein Attribut, ein verbessertes System zur Zugriffskontrolle, ein verbessertes Verfahren zur Freigabe eines Zugriffs auf eine zugriffsbeschränkte Sicherungseinrichtung sowie ein verbessertes Sicherheitssystem zu schaffen.

Die der Erfindung zugrunde liegende Aufgabe wird durch die Merkmale der unabhängigen Patentansprüche gelöst. Bevorzugte Ausführungsformen der Erfindung sind in den abhängigen Patentansprüchen angegeben.

Ausführungsformen der Erfindung betreffen ein Verfahren zur Kontrolle eines Zugriffs eines Terminals auf ein in einem Mobilfunkgerät gespeichertes Attribut, wobei das Mobilfunkgerät eine erste Mobilfunkschnittstelle, eine erste Kommunikationsschnittstelle und eine Applikation umfasst, die dazu konfiguriert ist, das Mobilfunkgerät zum Ausführen des Verfahrens zu steuern, wobei das Verfahren eine Authentisierung des Terminals durch das Mobilfunkgerät und eine Authentisierung des Mobilfunkgeräts durch das Terminal umfasst. Die Authentisierung des Terminals durch das Mobilfunkgerät umfasst:

- Senden eines ersten Zugriffstokens von dem Terminal an das Mobilfunkgerät,
- Verifizierung einer ersten Signatur des ersten Zugriffstokens mit einem dem Terminal zugeordneten statischen öffentlichen Schlüssel durch das Mobilfunkgerät,
- Erzeugen und Senden eines sitzungsgebundenen temporären öffentlichen Schlüssels durch das Terminal an das Mobilfunkgerät,
- Erzeugen und Senden eines zufälligen ersten Geheimnisses durch das Mobilfunkgerät an das Terminal,
- Erstellen einer zweiten Signatur des zufälligen ersten Geheimnisses mit einem dem Terminal zugeordneten statischen privaten Schlüssel und dem sitzungsgebundenen temporären öffentlichen Schlüssel des Terminals,
- Senden der zweiten Signatur durch das Terminal an das Mobilfunkgerät,
- Verifizierung der zweiten Signatur des zufälligen ersten Geheimnisses durch das Mobilfunkgerät unter Verwendung des zufälligen ersten Geheimnisses, des sitzungsgebundenen temporären öffentlichen Schlüssels des Terminals und des dem Terminal zugeordneten statischen öffentlichen Schlüssels,
- nach erfolgreicher Verifizierung der ersten und zweiten Signatur, Freigabe des Zugriffs des Terminals auf das Attribut.

Der Zugriff des Terminals auf das Attribut erfolgt nur unter der Voraussetzung der erfolgreichen Authentisierung des Mobilfunkgeräts durch das Terminal.

Unter einem "Mobilfunkgerät" wird hier und im Folgenden ein tragbares elektronisches Gerät mit einer Mobilfunkschnittstelle zu einem digitalen zellularen Mobilfunknetzwerk verstanden, welches nach einem Mobilfunkstandard wie zum Beispiel GSM, UMTS, LTE, CDMA oder einem anderen Standard aufgebaut sein kann. Bei der Mobilfunkschnittstelle kann es sich auch um eine WLAN-Funkschnittstelle handeln, wobei eine Funkzelle durch ein WLAN gebildet, beispielsweise nach dem Standard der IEEE-802.11-Familie. Bei dem Mobilfunkgerät kann es sich insbesondere um ein batteriebetriebenes Endgerät, wie zum Beispiel ein sogenanntes Handy, insbesondere ein Smartphone, einen Tablet-, Notebook- oder Laptop-Computer oder auch eine Smartwatch, Smartglasses oder ein Activity Tracker, d.h. ein Gerät zum Aufzeichnen und Versenden fitness- und gesundheitsrelevanter Daten, wie etwa ein Fitnessarmband, handeln. Insbesondere kann das Mobilfunkgerät ein Betriebssystem wie zum Beispiel Android, Apple iOS oder Windows aufweisen, welches zur Installation von Anwendungsprogrammen, sogenannten Apps, ausgebildet ist.

Unter einem "Attribut" wird im Folgenden ein Datenwert, zum Beispiel eine Zahl oder ein Text, verstanden. Bei dem Attribut kann es sich um eine Angabe bezüglich der Identität eines Nutzers handeln, dem das Mobilfunkgerät zugeordnet ist, insbesondere bezüglich dessen sogenannter digitaler Identität. Beispielsweise können Name, Vorname, Adresse des Nutzers Attribute darstellen. Ein Attribut kann auch Daten beinhalten, die zur Überprüfung der Berechtigung des Nutzers zur Inanspruchnahme eines bestimmten Online-Dienstes dienen, wie zum Beispiel das Alter des Nutzers, wenn dieser einen Onlinedienst in Anspruch nehmen möchte, der einer bestimmten Altersgruppe vorbehalten ist, oder ein anders Attribut, welches die Zugehörigkeit des Nutzers zu einer bestimmten Gruppe dokumentiert, welche zur Nutzung des Online-dienstes berechtigt ist. Ein "Attribut" kann auch einen Datenwert bezeichnen, welcher eine Zugangsberechtigung zu einer zugriffsbeschränkten Sicherungseinrichtung umfasst. In diesem Zusammenhang kann das Attribut ebenfalls eine bestimmte Gruppenzugehörigkeit angeben, wobei der Zugriff auf die zugriffsbeschränkte Sicherungseinrichtung von der besagten Gruppenzugehörigkeit abhängt.

Eine "zugriffsbeschränkte Sicherungseinrichtung" wird im Rahmen der vorliegenden Beschreibung als eine Einrichtung verstanden, die den Zugang zu bestimmten räumlichen Bereichen oder auch den Zugriff auf bestimmte Daten kontrolliert. Ein Zugriff ist nur nach Nachweis einer entsprechenden Berechtigung mittels des Mobilfunkgeräts möglich. Als Sicherungseinrichtung wird somit im Folgenden jegliches softwarebasierte, firmwarebasierte und/oder hardwarebasierte System bezeichnet, welches einem Nutzer nur unter der Voraussetzung einer erfolgreichen Authentifizierung gegenüber diesem System Zugriff auf bestimmte geschützte Objekte wie etwa Daten, Funktionalitäten oder räumliche Bereiche gewährt. Eine Sicherungseinrichtung kann beispielsweise eine Alarmanlage, eine Verriegelungsanlage, ein Gebäude, einen Raum, ein Gerät, insbesondere ein Datenverarbeitungsgerät, eine Komponente eines Geräts, ein Softwareprogramm und/oder ein Softwaremodul umfassen. Falls die elektronische Identifikation des Nutzers diesen Nutzer gegenüber einem Zugangsmanagementserver als berechtigt ausweist, unterbindet der Zugangsmanagementserver bzw. die mit diesem in Kommunikation stehende Sicherungseinrichtung für diesen Nutzer beispielsweise ein Auslösen eines Alarms der Alarmanlage bei Zugriff auf die Sicherungseinrichtung, entriegelt die Verriegelungsanlage, gewährt Zugang zu dem Gebäude oder dem Raum und/oder gewährt Zugriff auf das Gerät, auf die Komponente des Geräts, auf das Softwareprogramm und/oder das Softwaremodul.

Ein "Zugangsmanagementserver" wird im Folgenden als ein Server verstanden, welcher die für einen Zugang und/oder Zugriff der oben genannten Art notwendigen Berechtigungen verwaltet und gegebenenfalls gegenüber einer internen Datenbank abgleicht.

Unter einem "statischen" Schlüssel wird im Folgenden ein kryptografischer Schlüssel bzw. Datenwert verstanden, welcher in einem nichtflüchtigen Speichermedium gespeichert ist und für mehr als nur einer Sitzung Verwendung finden kann. Im Gegensatz dazu werden Sitzungsschlüssel, d.h. sitzungsgebundene, temporäre Schlüssel bzw. Datenwerte, nur für eine Sitzung generiert und nicht permanent gespeichert, sodass sie in einer weiteren Sitzung nicht mehr verwendet werden können. Entsprechende Schlüssel bzw. Datenwerte werden auch als ephemer bezeichnet.

Unter einem "permanenten" Zertifikat wird im Folgenden ein digitales Zertifikat verstanden, welches für mehr als nur einer Sitzung Verwendung finden kann. Ein permanentes Zertifikat kann beispielsweise einen statischen öffentlichen Schlüssel umfassen und mittels eines statischen privaten Schlüssels signiert sein. Im Gegensatz dazu werden temporäre Zertifikate mittels temporärer Schlüssel nur für eine Sitzung generiert, sodass sie in einer weiteren Sitzung nicht mehr verwendet werden können.

Unter einem "Zugriffstoken" wird im Folgenden ein Softwareelement verstanden, welches dazu konfiguriert ist eine Zugriffsberechtigung auf eine Informatikeinrichtung, wie einen Computer, Server, Terminal, Chipkarte nachzuweisen. Insbesondere kann es sich bei dem Zugriffstoken um ein Softwareelement handeln, für welches eine Zugriffsberechtigung durch die Informatikeinrichtung verifiziert wurde und welches auf der Informatikeinrichtung hinterlegt ist. Bei einem Zugriffstoken kann es sich beispielsweise um ein permanentes Zertifikat oder einen aus einem permanenten Zertifikat abgeleiteten Hash-Wert handeln. Nach Ausführungsformen umfasst der HashWert einen Hash von Metadaten des permanenten Zertifikats. Bei einer Signatur des Zugriffstokens kann es sich beispielsweise um eine Signatur aus dem permanenten Zertifikat handeln, aus dem der Hash-Wert abgeleitet ist, oder um eine Signatur des abgeleiteten Hash-Werts selbst.

Unter einem "Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Ein Zertifikat kann beispielsweise einen öffentlichen Schlüssel beinhaltet und signiert sein. Alternativ sind auch Zertifikate basierend auf zero-knowledge Kryptosystemen möglich. Beispielsweise kann das Zertifikat dem Standard X.509 oder einem anderen Standard entsprechen. Beispielsweise handelt es sich bei dem Zertifikat um ein Card Verifiable Certificate (CVC).

Das Zertifikat kann Metadaten umfassen, die beispielsweise spezifizieren, für welches Attribut oder welche Attribute des Nutzers, die in dem geschützten Speicherbereich des Mobilfunkgeräts gespeichert sind, ein Lesegerät bzw. Lesemodul zur Durchführung eines Lesezugriffs berechtigt ist. Ferner können durch Metadaten auch die jeweiligen Schreibrechte für Attributspezifikationen oder Attribute in einem Zertifikat definiert sein. Ein solches Zertifikat wird auch als Berechtigungszertifikat bezeichnet.

Digitale Zertifikate sind bei der Absicherung elektronischer Kommunikation durch asymmetrische kryptographische Verfahren ein bewährtes Mittel um die Echtheit und die Zuordnung der kryptographischen Mittel zu einer bestimmten Person nachzuweisen. Zertifikate sind strukturierte Daten, die die Authentizität und/oder weitere Eigenschaften des Eigentümers eines öffentlichen Schlüssels (Signaturprüfschlüssel) dokumentieren und durch eine unabhängige, glaubwürdige Instanz (Zertifizierungsdienstanbieter/ZDA), im Allgemeinen die das Zertifikat zuteilende Zertifizierungsstelle, bestätigen. Zertifikate werden in der Regel einem breiten Personenkreis zur Verfügung gestellt um diesem eine Prüfung elektronischer Signaturen auf Authentizität und Gültigkeit zu ermöglichen. Ein Zertifikat kann einer elektronischen Signatur zum Beispiel zugeordnet werden, wenn der zu dem öffentlichen Schlüssel gehörende private Schlüssel zur Generierung der zu prüfenden elektronischen Signatur verwendet wurde. Dadurch, dass ein ZDA ein Zertifikat in Assoziation mit einem öffentlichen Schlüssel der Allgemeinheit zur Verfügung stellt, ermöglicht ein ZDA den Nutzern asymmetrischer Kryptosysteme den öffentlichen Schlüssel einer Identität, beispielsweise einer Person, einer Organisation, einem Energie- oder Computersystem, zuzuordnen.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem privaten Schlüssel, welcher zur Verschlüsselung von Daten verwendet wird und im Regelfall geheim gehalten werden muss, und einem öffentlichen Schlüssel, welcher an Dritte, beispielsweise an einen Dienstanbieter und/oder einen ZDA, weitergegeben werden darf. Der öffentliche Schlüssel ermöglicht es jedermann, Daten für den Inhaber des privaten Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen.

Digitale Signaturen werden zur sicheren Abwicklung von Geschäften im Internet eingesetzt und ermöglichen die Prüfung der Identität der Vertragspartner und der Unverfälschtheit der ausgetauschten Daten. Um dies zu gewährleisten, ist in der Regel eine Public-Key-Infrastruktur notwendig, die die Gültigkeit der verwendeten Schlüssel durch Zertifikate bestätigt.

Die Erstellung einer digitalen Signatur, im Folgenden auch lediglich als "Signatur" oder "elektronische Signatur" bezeichnet, ist ein kryptographisches Verfahren, bei dem zu beliebigen Daten, zum Beispiel einem elektronischen Dokument, ein weiterer Datenwert, welcher als "Signatur" bezeichnet wird, berechnet wird. Die Signatur kann zum Beispiel ein verschlüsselter Hashwert des elektronischen Dokumentes sein, insbesondere ein mit einem einem Zertifikat zugeordneten privaten Schlüssel eines kryptographischen Schlüsselpaares verschlüsselter Hashwert. Die Besonderheit einer solchen Signatur besteht darin, dass deren Urheberschaft und Zugehörigkeit zu einer bestimmten Person oder Instanz durch jeden Dritten geprüft werden kann.

Unter einem "geschützten Speicherbereich" wird hier ein Bereich eines elektronischen Speichers verstanden, auf den ein Zugriff, das heißt ein Lesezugriff oder ein Schreibzugriff, von einem mit dem Speicher gekoppelten Prozessor nur dann ermöglicht wird, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Unter einer "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann, beispielsweise nach einem RFID- und/oder NFC-Standard. Bei der Kommunikationsschnittstelle kann es sich um eine interne Schnittstelle des Mobilfunkgeräts oder um eine externe Schnittstelle handeln, welche beispielsweise mittels eines Kabels oder kabellos mit dem Mobilfunkgerät verbunden ist. Eine externe Kommunikationsschnittstelle kann beispielsweise in Form einer Smartwatch für ein Mobilfunkgerät in Form eines Smartphones bereitgestellt sein. Technisch gesehen könnte ein Terminal dann beispielsweise per NFC mit der Smartwatch kommunizieren, während die Kommunikationsinhalte logisch aber an das Smartphone weitergeleitet und im Sinne des Zugangsprotokolls von der Applikation auf dem Smartphone beantwortet werden.

Unter einem "Terminal" wird hier ein elektronisches Gerät verstanden, welches ein Lesegerät umfasst, das einen Lesezugriff und/oder einen Schreibzugriff auf das Mobilfunkgerät ermöglicht, beispielsweise in Form eines sogenannten Chipkartenterminals. Das Terminal mit dem Lesegerät kann einen integralen Bestandteil eines Nutzer-Computersystems bilden oder als separate Komponente ausgeführt sein, beispielsweise als Peripheriegerät des Nutzer-Computersystems. Insbesondere kann es sich bei dem Lesegerät um ein sogenanntes Klasse 1, 2 oder 3 Chipkartenlesegerät handeln. Das Lesegerät kann mit einer kontaktlosen und/oder kontaktbehafteten Schnittstelle zum Datenaustausch mit einem Mobilfunkgerät ausgestattet ist.

Ausführungsformen der Erfindung können den Vorteil haben, dass der Zugriff des Terminals auf das Attribut in sicherer Weise seitens des Mobilfunkgeräts kontrolliert werden kann. Die Gefahr eines unberechtigten Zugriffs auf das Attribut wird dadurch minimiert.

Unter einer "Applikation" wird hier ohne Einschränkung jede Art von Computerprogramm verstanden, welches maschinenlesbare Instruktionen zur Steuerung einer Funktionalität des Mobilfunkgeräts umfasst. Bei der Applikation kann es sich beispielsweise um eine Applikation handeln, die auf dem Betriebssystem des Mobilfunkgeräts, wie etwa Android, Apple iOS oder Windows, ausführbar ist.

Das Mobilfunkgerät kann ein Chipkartenbetriebssystem umfassen und bei der Applikation zum Ausführen des Zugriffskontrollverfahrens (Zugangsapplikation) kann es sich um eine Chipkartenapplikation handeln, die auf dem Chipkartenbetriebssystem ausführbar ist.

Ein Chipkartenbetriebssystem (Card Operating System/COS) ist ein für eine Chipkarte konfiguriertes Betriebssystem, welches die spezifischen Funktionen für die Verwaltung, den Betrieb, die Bearbeitung, Speicherung, Übertragung und Verschlüsselung von Chipkarten-Anwendungen, deren Daten und Dateien unterstützt. Beispielsweise weisen Ausführungsformen von Chipkartenbetriebssystemen daher im Gegensatz zu allgemeinen Betriebssystemen, etwa mobilen Betriebssystemen wie Android, Apple iOS oder Windows, keine Benutzeroberfläche und keine Zugriffsmöglichkeiten auf externe Speichermedien auf.

Eine Chipkartenapplikation ist ein Computerprogramm, dessen maschinenlesbare Instruktionen Chipkartenkommandos, beispielsweise Kommandos gemäß dem ISO7816 Standard, umfassen.

Durch die Mobilfunkschnittstelle kann das Mobilfunkgerät, bei welchem es sich beispielsweise um ein Smartphone handelt, zusätzlich zum Initialisieren der Zugangsapplikation, bei der es sich beispielsweise um eine Chipkartenapplikation handelt, benutzt werden. Hierzu kann das Mobilfunkgerät nach Ausführungsformen mittels seiner Mobilfunkschnittstelle über ein digitales zellulares Mobilfunknetzwerk mit einem Fernwartungsserver kommunizieren. Die Kommunikation kann dabei nach einem Standard wie zum Beispiel GSM, UMTS, LTE, CDMA, WLAN (z.B. IEEE-802.11-Familie) oder einem anderen Standard erfolgen. So kann etwa das Provisionieren kryptographischer Schlüssel beispielsweise über eine Mobilfunknummer oder ein anderes Merkmal des Smartphones erfolgen, welches einem provisionierenden Fernwartungsserver bekannt ist. Ein entsprechender Fernwartungsserver kann beispielsweise einem Trustcenter zugeordnet sein oder mit einem Trustcenter in Verbindung stehen. Nach Ausführungsformen kann die Zugangsapplikation durch ein Mobiles Device-Management über einen Fernwartungsserver flexibel mit neuen kryptographischen Schlüsseln, Berechtigungen oder Daten ausgestattet wird, während das Mobilfunkgerät beim Inhaber verbleibt.

Nach Ausführungsformen erfolgt das Erstellen der zweiten Signatur des zufälligen ersten Geheimnisses durch das Terminal.

Nach Ausführungsformen erfolgt die Authentisierung des Terminals durch das Mobilfunkgerät über einen Authentisierungsserver, welcher den dem Terminal zugeordneten statischen privaten Schlüssel umfasst, wobei das Terminal das zufällige erste Geheimnis an den Authentisierungsserver weiterleitet und den sitzungsgebundenen temporären öffentlichen Schlüssel des Terminals an den Authentisierungsserver sendet, wobei das Erstellen der zweiten Signatur des zufälligen ersten Geheimnisses durch den Authentisierungsserver erfolgt, und wobei der Authentisierungsserver die zweite Signatur an das Terminal sendet.

Ausführungsformen können den Vorteil aufweisen, das permanente Schlüssel des Terminals, wie etwa ein permanenter privater Schlüssel, zentral auf dem Authentisierungsserver gespeichert und von diesem nach Bedarf zur Verfügung gestellt bzw. genutzt werden können. Diese erleichterter die sichere Verwaltung der entsprechenden permanenten Schlüssel und vereinfacht beispielsweise Updates. Zudem werden auf Grund der zentralen Speicherung die Sicherheitsanforderungen an die einzelnen Terminals gesenkt, weshalb diese weniger komplex und aufwendig konfiguriert werden müssen.

Des Weiteren erfolgt nur bei Bedarf eines entsprechenden permanenten privaten Schlüssels eine Kommunikation zwischen Terminal und Authentisierungsserver. Die Authentisierungsprozesse, welche nur ephemere Schlüssel benötigen, werden direkt zwischen Mobilfunkgerät und Terminal ausgeführt ohne Einbindung eines Remote-Servers wie etwa des Authentisierungsservers. Hierdurch werden die notwendige Kommunikation und der kryptographisch gesicherte Datenaustausch über ein Netzwerk minimiert und die resultierenden Latenzzeiten reduziert. Andererseits werden für die permanenten Schlüssel alle Vorteile einer zentral Verwalteten realisiert.

Nach einer Ausführungsform wird das erste Zugriffstoken auf eine erfolgreiche Verifizierung der ersten und zweiten Signatur hin als gültiges Zugriffstoken in dem Mobilfunkgerät gespeichert wird. Ausführungsformen der Erfindung können den Vorteil haben, dass bei einer zukünftigen Terminal-Authentisierung eine aufwendige vollständige Signaturüberprüfung vermieden werden kann. Stattdessen genügt ein Vergleich eines empfangenen Zugriffstokens mit dem als gültig hinterlegten Zugriffstoken, um die Gültigkeit des empfangenen Zugriffstokens zu verifizieren. Dies erlaubt eine schnellere Terminal-Authentisierung bei gleicher Sicherheit.

Nach Ausführungsformen wird das Chipkartenbetriebssystem von einem Emulator des Mobilfunkgeräts emuliert und die Chipkartenapplikation auf dem emulierten Chipkartenbetriebssystem ausgeführt.

Nach Ausführungsformen umfasst das Mobilfunkgerät ein Chipkartenbetriebssystem und wobei es sich bei der Applikation um eine Chipkartenapplikation handelt, die auf dem Chipkartenbetriebssystem ausführbar ist

Nach Ausführungsformen ist das Chipkartenbetriebssystem auf einem Sicherheitsmodul des Mobilfunkgeräts installiert und die Chipkartenapplikation wird auf dem Chipkartenbetriebssystem des Sicherheitsmoduls ausgeführt.

Bei dem Sicherheitsmodul kann es sich beispielsweise um einen geschützten Mikrocontroller handeln, d.h. einen Mikrocontroller mit physikalisch beschränkten Zugriffsmöglichkeiten. Zudem mag ein geschützter Mikrocontroller zusätzliche Maßnahmen gegen Missbrauch aufweisen, insbesondere gegen unberechtigte Zugriffe auf Daten im Speicher des Mikrocontrollers. Beispielsweise umfasst ein geschützter Mikrocontroller Sensoren zur Überwachung des Zustands des Mikrocontrollers sowie von dessen Umgebung, um Abweichungen vom Normalbetrieb zu erkennen, welche auf Manipulationsversuche hinweisen können. Entsprechende Sensortypen umfassen beispielweise einen Taktfrequenzsensor, einen Temperatursensor, einen Spannungssensor, und/oder einen Lichtsensor. Taktfrequenzsensoren, Temperatursensoren und Spannungssensoren erfassen beispielweise Abweichungen der Taktfrequenz, Temperatur und/oder Spannung nach oben oder unten von einem vordefinierten Normalbereich. Zudem kann ein geschützter Mikrocontroller einen nichtflüchtigen elektronischen Speicher mit einem geschützten Speicherbereich umfassen.

Des Weiteren kann ein geschützter Mikrocontroller Mittel zur kryptographischen Datensicherung umfassen, insbesondere in dem geschützten Speicherbereich, wie beispielsweise einen Zufallszahlengenerator, einen Generator für kryptographische Schlüssel, einen Hashgenerator, ein Ver-/Entschlüsselungsmodul, ein Signaturmodul, Zertifikate, und/oder einen oder mehrere nicht migrierbare kryptographische Schlüssel, wie beispielsweise einen sogenannten Endorsement Key, Storage Root Key und/oder Attestation Identity Keys.

Bei dem Sicherheitsmodul kann es sich beispielsweise um ein Trusted Platform Module (TPM) nach TCG-Spezifikation handeln. Das TPM ist einem lokalen Computer, beispielsweise ein PC, Notebook, Tablet PC, PDA, Smartphone, Smartwatch, Smartglasses, oder ein Activity Tracker, wie etwa ein Fitnessarmband, zugeordnet. Ein Computer mit TPM, speziell angepasstem Betriebssystem und entsprechender Software bildet zusammen eine vertrauenswürdige Plattform (Trusted Computing Plattform, TC-Plattform). Durch das Festlegen entsprechender Beschränkungen kann sichergestellt werden, dass eine solche vertrauenswürdige Plattform nicht mehr entgegen den Vorgaben des Herstellers genutzt werden kann.

Nach Ausführungsformen ist das Sicherheitsmodul als ID-Token in Form eines Dokuments, insbesondere eines Wert- oder Sicherheitsdokuments, ausgestaltet. Bei dem ID-Token kann es sich um einen Hardwaretoken handeln oder um einen Softtoken, wenn dieser kryptografisch an einen Hardwaretoken, das heißt beispielsweise an ein sogenanntes Secure Element, gebunden ist. Insbesondere kann ein solcher kryptografisch an ein Secure Element gebundener Softtoken gemäß DE 10 2011 082 101 erzeugt werden.

Unter einem "Dokument" werden papierbasierte und/oder kunststoffbasierte Dokumente verstanden, wie zum Beispiel Ausweisdokumente, insbesondere Reisepässe, Personalausweise, Visas sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Bankkarten und Kreditkarten, Frachtbriefe oder sonstige Berechtigungsnachweise, in die ein Datenspeicher zur Speicherung von zumindest einem Attribut integriert ist.

Nach Ausführungsformen ist das Sicherheitsmodul in dem Mobilfunkgerät zerstörungsfrei austauschbar in einer Aufnahme eines Lesegeräts zum Auslesen von Daten des Sicherheitsmoduls angeordnet. Nach Ausführungsformen wird das Sicherheitsmodul beispielsweise in Form einer Telekommunikations-Chipkarte, beispielsweise einer SIM-Karte, bereitgestellt.

Nach Ausführungsformen ist das Sicherheitsmodul in dem Mobilfunkgerät fest fixiert angeordnet, sodass es nicht zerstörungsfrei entfernt werden kann.

Ausführungsformen der Erfindung können besonders vorteilhaft sein, da durch das Sicherheitsmodul die Funktionalität eines Hardware-Tokens, insbesondere einer Chipkarte, zur Verfügung stellen kann. Hierbei ist vorteilhaft, dass einerseits der Aufwand für die Produktion und Distribution von Chipkarten eingespart werden kann und dass andererseits das Mitführen von ein oder mehreren Chipkarten zusätzlich zu einem elektronischen Gerät entfallen kann.

Nach Ausführungsformen der Erfindung umfasst die Authentisierung durch das Mobilfunkgerät auf den Empfang des ersten Zugriffstokens hin ein automatisches Überprüfen, ob in dem Mobilfunkgerät ein mit dem empfangenen ersten Zugriffstoken übereinstimmendes gültiges zweites Zugriffstoken gespeichert ist, wobei, im Falle dass ein gültiges zweites Zugriffstoken in dem Mobilfunkgerät gespeichert ist, eine Freigabe eines Zugriffs des Terminals auf das in dem Mobilfunkgerät gespeicherte Attribut erfolgt, wobei, im Falle dass kein gültiges zweites Zugriffstoken in dem Mobilfunkgerät gespeichert ist, die Authentisierung des Terminals durch das Mobilfunkgerät über den Authentisierungsserver erfolgt.

Ausführungsformen der Erfindung können den Vorteil haben, dass die Geschwindigkeit, mit welcher die Zugriffskontrolle seitens des Mobilfunkgeräts erfolgt, trotz der hohen Sicherheit hoch sein kann, da nicht für jeden Zugriffsversuch des Terminals auf das Attribut die oben beschriebenen Signaturüberprüfungen durchgeführt werden müssen. Solange ein gültiges übereinstimmendes Zugriffstoken, beispielsweise in Form eines Hash-Werts, in dem Mobilfunkgerät gespeichert ist, wird eine Signaturüberprüfung vermieden. So entfallen beispielsweise damit verbunden zeit- und energieaufwendige elliptische Kurvenoperationen. Vielmehr wird ein schneller Speicherzugriff auf einen entsprechenden Speicherbereich des Mobilfunkgeräts ermöglicht, was nach Überprüfung der Gültigkeit des Zugriffstokens in dem Mobilfunkgerät ohne weitere Überprüfung beispielsweise eines permanenten Zertifikats des Terminals den Zugriff auf die in dem Mobilfunkgerät gespeicherten Attribute erlaubt.

Nach Ausführungsformen der Erfindung umfasst das Zugriffstoken eine Zugriffsberechtigung, wobei das Verfahren ferner umfasst:

- im Falle dass kein gültiges zweites Zugriffstoken in dem Mobilfunkgerät gespeichert ist, nach dem erfolgreichen Verifizieren der ersten und zweiten Signatur Verknüpfen und Speichern der Zugriffsberechtigung mit dem ersten Zugriffstoken in dem Mobilfunkgerät, wobei eine Freigabe des Zugriffs des Terminals auf das Attribut entsprechend der Zugriffsberechtigung erfolgt,
- im Falle dass ein gültiges zweites Zugriffstoken in dem Mobilfunkgerät gespeichert ist, Lesen der mit dem zweiten Zugriffstoken verknüpft gespeicherten Zugriffsberechtigung, wobei eine Freigabe des Zugriffs des Terminals auf das Attribut entsprechend der Zugriffsberechtigung erfolgt.

Dies kann den Vorteil haben, dass das durch das Zugriffstoken im Voraus festgelegt werden kann, wie und auf welche Attribute das Terminal Zugriff erhalten soll. Beispielsweise kann dies über ein Terminal-Zertifikat festgelegt werden, aus welchem das Zugriffstoken in Form eines Hash-Werts abgeleitet wird. Die Zugriffsberechtigung wird nach Ausführungsformen von Metadaten des Zertifikats umfasst, deren Hash von dem Hash-Wert mit umfasst wird. Beispielsweise können spezifische Attribute angegeben werden, sodass insgesamt nicht ein Vollzugriff auf sämtliche im Mobilfunkgerät gespeicherten Attribute erfolgt, sondern nur auf eine beschränkte Auswahl hiervon. Ferner kann die Zugriffsberechtigung eine Angabe dahingehend enthalten sein, ob nur ein Lesezugriff oder ein Lese- und Schreibzugriff gegeben ist.

In einem beispielhaften Anwendungsszenario kann das besagte Terminal in einem Sicherheitssystem zum Einsatz kommt, bei welchem das Terminal mit einer zugriffsbeschränkten Sicherungseinrichtung gekoppelt ist. Die Sicherungseinrichtung kann beispielsweise den Zugang zu einem Raum, Gebäude oder einem Computersystem sichern. Bei erstmaliger Benutzung des Mobilfunkgeräts zum Zugang über die Sicherungseinrichtung kann das Terminal eine entsprechende Zugangsberechtigung als Attribut in dem Mobilfunkgerät speichern. Für diesen erstmaligen Speicherzugriff benötigt das Terminal eine entsprechende Zugriffsberechtigung. Ferner ist es denkbar, dass das Terminal in nachfolgenden Kommunikationsvorgängen mit dem Mobilfunkgerät zudem die Berechtigung behalten muss, die Zugangsmöglichkeit über die Sicherungseinrichtung beispielsweise durch Entzug der Zugangsberechtigung zu unterbinden oder einzuschränken.

Nach einer Ausführungsform umfasst das Verfahren ferner,

- im Falle dass kein gültiges zweites Zugriffstoken in dem Mobilfunkgerät gespeichert ist, nach dem erfolgreichen Verifizieren der ersten und zweiten Signatur Verknüpfen und Speichern des statischen öffentlichen Schlüssels des Terminals mit dem ersten Zugriffstoken in dem Mobilfunkgerät, wobei eine weitere Kommunikation mit dem Terminal verschlüsselt unter Verwendung des statischen öffentlichen Schlüssels des Terminals erfolgt,
- im Falle dass ein gültiges zweites Zugriffstoken in dem Mobilfunkgerät gespeichert ist, Lesen des mit dem Zugriffstoken verknüpft gespeicherten statischen öffentlichen Schlüssel des Terminals, wobei eine weitere Kommunikation mit dem Terminal verschlüsselt unter Verwendung des statischen öffentlichen Schlüssels des Terminals erfolgt.

Beispielsweise ist der statische öffentliche Schlüssel des Terminals dem permanenten Zertifikat des Terminals zugeordnet, dessen Hash-Wert den Zugangstoken bildet. Der statische öffentliche Schlüssel wird verknüpft mit dem Hash-Wert in dem Mobilfunkgerät gespeichert und eine weitere Kommunikation mit dem Terminal erfolgt verschlüsselt unter Verwendung des statischen öffentlichen Schlüssels des Terminals. Zum Beispiel ist der statische öffentliche Schlüssel in dem permanenten Zertifikat enthalten, wobei der Hash-Wert einen Hash des statischen öffentlichen Schlüssels umfasst.

Dies kann den Vorteil haben, dass die Geschwindigkeit der Authentisierung des Terminals durch das Mobilfunkgerät weiter erhöht wird. Im Falle dass ein gültiger Zugangstoken, z.B. Hash-Wert, in dem Mobilfunkgerät gespeichert ist, entfällt ein erneuter Austausch in Form einer Datenübertragung des statischen öffentlichen Schlüssels des Terminals. Der gespeicherte statische öffentliche Schlüssel des Terminals kann direkt aus dem Speicher des Mobilfunkgeräts gelesen und für die weitere Kommunikation mit dem Terminal verwendet werden.

Nach einer Ausführungsform ist der permanente öffentliche Schlüssel des Terminals in dem Zugriffstoken enthalten.

Beispielsweise ist der statische öffentliche Schlüssel des Terminals in einem permanenten Zertifikat enthalten, das das Terminal dem Mobilfunkgerät als Zugriffstoken oder zur Erzeugung des Zugriffstokens übersendet. Dadurch wird der statische öffentliche Schlüssel im Rahmen das Terminal Authentisierung automatisch empfangen und kann in Verbindung mit dem aus dem Zertifikat abgeleiteten Hash-Wert weitere Verwendung finden, ohne dass hierzu ein separater Datenaustauschschritt bezüglich notwendig wäre. Da ein solcher Hash-Wert den Hash des statischen öffentlichen Schlüssels umfasst, ist außerdem sichergestellt, dass der Hash-Wert, d.h. das Zugriffstoken, in eindeutiger Weise dem besagten Terminal zugeordnet werden kann. Zugleich wird unter der Voraussetzung der Einmaligkeit des statischen öffentlichen Schlüssels sichergestellt, dass auch das Zugriffstoken in Form des Hash-Werts, der den Hash des statischen öffentlichen Schlüssels umfasst, ebenfalls einmalig ist und somit eine eindeutige Identifikation und Authentifizierung des Terminals erlaubt.

Nach einer Ausführungsform umfasst das Verfahren ferner,

- im Falle dass kein gültiges zweites Zugriffstoken in dem Mobilfunkgerät gespeichert ist, nach dem erfolgreichen Verifizieren der ersten und zweiten Signatur Erzeugen und Verknüpfen eines Zeitstempels mit dem Zugriffstoken in dem Mobilfunkgerät, wobei der Zeitstempel eine maximale Gültigkeitsdauer des Zugriffstokens angibt,
- im Falle dass ein zweites Zugriffstoken in dem Mobilfunkgerät gespeichert ist, Lesen des mit dem zweiten Zugriffstoken verknüpft gespeicherten Zeitstempels, wobei das zweite Zugriffstoken nur dann gültig ist, wenn der Zeitstempel gültig ist.

Nach einer Ausführungsform wird der Zeitstempel für das Speichern des Zugriffstokens in dem Mobilfunkgerät auf Basis einer vordefinierten relativen Gültigkeitsdauer erzeugt.

Die besagte relative Gültigkeitsdauer kann beispielsweise eine Zeitdauer wie ein Jahr, sechs Monate, 24 Stunden umfassen. Beispielsweise wird mit dem Speichern des Zugriffstokens eine Systemzeit des Terminals oder des Mobilfunkgeräts herangezogen und die relative Gültigkeitsdauer der Systemzeit hinzuaddiert. Hieraus ergibt sich die maximale Gültigkeitsdauer in Form eines absoluten Zeitwertes, z.B. eines Ablaufdatums oder einem Ablaufzeitpunkt. Umfasst das Zugriffstoken Metadaten in Form eines Zeitstempels, kann damit die Gültigkeitsdauer des Zugriffs des Terminals auf das Attribut des Mobilfunkgeräts ausgehend von einem initialen Zeitpunkt für eine bestimmte Zeitdauer ohne weitere Authentisierung durchgeführt werden. Eine vollständige Authentisierung erfolgt in diesem Fall nicht ständig, sondern nur zu vordefinierten Zeitpunkten, welche durch die relative Gültigkeitsdauer vorgegeben werden. Dabei legt das Terminal, welches die Metadaten bereitstellt selbst fest, in welchen zeitlichen Abständen eine vollständige Authentisierung des Terminals durch das Mobilfunkgerät zu erfolgen hat.

Die maximale Gültigkeitsdauer kann jedoch auch durch eine maximale Anzahl von Zugriffen des Terminals auf das Mobilfunkgerät gegeben sein. Nach einer Ausführungsform umfasst das Verfahren ferner,

- im Falle dass kein gültiges zweites Zugriffstoken in dem Mobilfunkgerät gespeichert ist, nach dem erfolgreichen Verifizieren der ersten und zweiten Signatur Erzeugen und Verknüpfen eines Nutzungszählers mit dem Zugriffstoken in dem Mobilfunkgerät, wobei der Nutzungszähler dazu konfiguriert ist die Anzahl der Nutzungen des Zugriffstokens zur Freigabe des Zugriffs des Terminals auf das Attribut zu zählen,
- im Falle dass ein zweites Zugriffstoken in dem Mobilfunkgerät gespeichert ist, Lesen des mit dem zweiten Zugriffstoken verknüpft Nutzungszähler, wobei das zweite Zugriffstoken nur dann gültig ist, wenn der Nutzungszähler einen vordefinierten Grenzwert nicht erreicht hat.

Ausführungsformen können den Vorteil haben, dass die maximale Anzahl beschleunigter Terminal-Authentisierungen unter Verwendung eines einmal auf dem Mobilfunkgerät hinterlegten gültigen zweiten Zugriffstoken beschränkt wird. Ist die maximale Anzahl an Nutzungen des zweiten Zugriffstokens erreicht, ist eine erneute vollständige Authentisierung notwendig.

Nach einer Ausführungsform wird der Nutzungszähler entweder mit einer vordefinierten maximalen Nutzungszahl erzeugt und von dieser bis Null als vordefiniertem Grenzwert herunterzählt oder mit Null erzeugt und bis zu einer vordefinierten maximalen Nutzungszahl als vordefiniertem Grenzwert hinauf zählt.

Ein konkretes Anwendungsbeispiel kann das oben beschriebene Sicherheitssystem darstellen, bei welchem ein Zugangsmanagementserver die finale Überprüfung des ausgelesenen Attributs und die Freigabe eines Zugriffs auf die Sicherungseinrichtung durchführt. Das Terminal arbeitet dabei als Schnittstelle zwischen Mobilfunkgerät und Zugangsmanagementserver und sorgt dafür, dass das Mobilfunkgerät sicher sein kann, dass es mit einer vertrauenswürdigen Instanz in Form des Terminals kommuniziert. Das Terminal kann nach Ausführungsformen ein Lesegerät bzw. Lesemodul zum Kommunizieren mit dem Mobilfunkgerät sowie ein Steuermodul zum Steuern der Kommunikation und des Datenaustauschs umfassen. Das Lesemodul kann beispielsweise eine Antenne zur kontaktlosen Kommunikation mit dem Mobilfunkgerät umfassen. Beispielsweise kann es sich bei dem Lesemodul um ein RIFD-Lesemodul handeln. Dabei kann beispielsweise die Kommunikation zwischen dem Lesemodul und dem Mobilfunkgerät entsprechend der Norm ISO 14443 drahtlos mit einer Frequenz von 13,56 MHz erfolgen. Die Kommunikation zwischen Terminal und Zugangsmanagementserver kann über ein Netzwerk wie etwa ein Intranet oder das Internet erfolgen. Sobald der Zugangsmanagementserver erstmalig die Freigabe des Zugriffs auf die Sicherungseinrichtung erteilt hat, kann über das Terminal ein entsprechendes Attribut im Mobilfunkgerät gespeichert werden, welches für einen bestimmten Zeitraum den weiteren Zugriff auf die Sicherungseinrichtung ohne weitergehende und zusätzliche aufwendige Authentisierung ermöglicht.

Nach einer Ausführungsform wird das Zugriffstoken in einer ersten Nachricht von dem Terminal an das Mobilfunkgerät gesendet, wobei die erste Nachricht ein Wurzelzertifikat umfasst, wobei, im Falle dass kein gültiges zweites Zugriffstoken in dem Mobilfunkgerät gespeichert ist, die Authentisierung durch das Mobilfunkgerät ferner ein Verifizieren des Zugriffstokens über das Wurzelzertifikat mittels eines in dem Mobilfunkgerät gespeicherten öffentlichen Schlüssels einer Wurzelzertifizierungsstelle umfasst, wobei erst nach erfolgreicher Verifizierung des Zugriffstokens über das Wurzelzertifikat das Speichern des Zugriffstokens und das Freigeben des Zugriffs des Terminals auf das Attribut erfolgt.

Beispielsweise wird das permanente Zertifikat des Terminals über das Wurzelzertifikat mittels eines in dem Mobilfunkgerät gespeicherten öffentlichen Schlüssels einer Wurzelzertifizierungsstelle verifiziert, wobei erst nach erfolgreicher Verifizierung des permanenten Zertifikats des Terminals über das Wurzelzertifikat das Speichern des Hash-Wertes als Zugriffstoken in dem Mobilfunkgerät und die Freigabe des Zugriffs des Terminals auf das Attribut erfolgt.

Dies kann den Vorteil haben, dass durch eine zentrale vertrauenswürdige Instanz, d.h. eine Wurzelzertifizierungsstelle, festgelegt werden kann, in welcher Weise der Zugriff auf das Attribut erfolgen kann. Ein Wurzelzertifikat, auch als Stammzertifikat bezeichnet, ist ein unsigniertes Public-Key-Zertifikat oder selbstsigniertes Zertifikat einer Wurzelzertifizierungsstelle, das dazu dient, die Gültigkeit aller untergeordneten Zertifikate zu validieren. Wurzelzertifikate sind ein wichtiger Bestandteil eines Public-Key-Infrastruktursystems (PKI-Systems) und implizit vertrauenswürdig. Ein Wurzelzertifikat basiert beispielsweise auf dem ISO X.509-Standard. Mit einer PKI-Infrastruktur bzw. PKI-System wird ein System bezeichnet, welches digitale Zertifikate ausstellen, verteilen und prüfen kann. Die innerhalb einer PKI ausgestellten Zertifikate werden zur Absicherung rechnergestützter Kommunikation verwendet.

Da üblicherweise der Wurzelzertifizierungsstelle sowohl von dem Mobilfunkgerät als auch dem Terminal vertraut wird, kann das Mobilfunkgerät davon ausgehen, dass sämtliche in den Metadaten enthaltenen Informationen als vertrauenswürdig anzusehen sind. Befinden sich in bzw. auf dem Mobilfunkgerät beispielsweise sensible persönliche Informationen wie ein Geburtsdatum, biometrische Informationen, eine Wohnadresse und dergleichen, muss ein Benutzer des Mobilfunkgeräts keine Sorge haben, dass das Terminal unbefugt in Besitz dieser Attribute gelangt. Durch die Absicherung über eine zentrale Wurzelzertifizierungsstelle ist insofern sichergestellt, dass ein Missbrauch des Mobilfunkgeräts durch das Terminal effektiv unterbunden werden kann.

Nach einer Ausführungsform wird die erste Nachricht ohne eine vorherige von dem Terminal empfangene Ankündigung oder Referenz der Zertifizierungsstelle des permanenten Zertifikats empfangen. Eine Auswahl der Wurzelzertifizierungsstelle des Terminals entfällt also und stattdessen arbeitet das Mobilfunkgerät grundsätzlich mit einer einzigen Wurzelzertifizierungsstelle. Dem Terminal ist das bekannt, sodass die Auswahl eines für eine spezifische Zertifizierungsstelle zugeschnittenen Zertifikats des Terminals auf Seiten des Mobilfunkgeräts entfällt. Damit entfällt auch ein zusätzlicher Datenübertragungsschritt vom Mobilfunkgerät zum Terminal zur Anforderung der zugehörigen Referenz der Zertifizierungsstelle des permanenten Zertifikats.

Nach einer Ausführungsform wird das erste Geheimnis automatisch in Erwiderung auf den Empfang des sitzungsgebundenen temporären öffentlichen Schlüssels des Terminals erzeugt und an das Terminal gesendet. Es wird somit keine explizite Anforderung des Terminals abwartend. Anstatt also seitens des Terminals mit einem zusätzlichen Kommando "Get Challenge" explizit das erste Geheimnis anzufordern, wird seitens des Mobilfunkgeräts das erste Geheimnis nach Empfang des sitzungsgebundenen temporären öffentlichen Schlüssels automatisch an das Terminal gesendet. Auch dies spart einen weiteren Kommunikationsschritt zwischen Mobilfunkgerät und Terminal, wodurch die Kommunikation beschleunigt wird.

Nach einer Ausführungsform ist das Zugriffstoken ein aus einem an das Mobilfunkgerät gesendeten permanenten Zertifikat des Terminals abgeleiteter Hash-Wert. Nach einer Ausführungsform umfasst der Hash-Wert einen Hash von Metadaten des permanenten Zertifikats.

Nach einer Ausführungsform umfasst die Authentisierung des Mobilfunkgeräts:

- Senden eines öffentlichen Schlüssels des Mobilfunkgeräts und eines zu dem öffentlichen Schlüssel zugehörigen Domain-Parameter an das Terminal,
- Berechnen eines dem Mobilfunkgerät und dem Terminal gemeinsamen zweiten Geheimnisses aus dem privaten Schlüssel des Mobilfunkgeräts, dem sitzungsgebundenen temporären öffentlichen Schlüssel des Terminals und dem DomainParameter durch das Mobilfunkgerät,
- Berechnen des gemeinsamen zweiten Geheimnisses aus dem öffentlichen Schlüssel des Mobilfunkgeräts, dem sitzungsgebundenen temporären privaten Schlüssel des Terminals und dem Domain-Parameter durch das Terminal,
- Erzeugen eines zufälligen dritten Geheimnisses durch das Mobilfunkgerät,
- Senden des zufälligen dritten Geheimnisses an das Terminal und
- Erzeugen eines symmetrischen Sitzungsschlüssels aus dem dritten Geheimnis und dem gemeinsamen zweiten Geheimnis durch das Mobilfunkgerät und das Terminal,

wobei die nachfolgende Kommunikation mit dem Zugriff auf das Attribut verschlüsselt mit dem symmetrischen Sitzungsschlüssel erfolgt und wobei ein Zugriff des Terminals auf das Attribut nur unter der Voraussetzung einer erfolgreichen Authentisierung des Mobilfunkgeräts gegenüber dem Terminal erfolgt.

Ausführungsformen können den Vorteil haben, dass durch die Authentisierung des Mobilfunkgeräts bzw. die Chip-Authentisierung ein sicherer Kommunikationskanal mit einer Ende-zu-Ende-Verschlüsselung zwischen dem Mobilfunkgerät und dem Terminal aufgebaut wird.

Nach einer Ausführungsform wird entweder der öffentliche Schlüssel des Mobilfunkgeräts automatisch gesendet oder das Mobilfunkgerät verfügt über mehrere verschiedene öffentliche Schlüssel, wobei einer dieser verschiedenen öffentlichen Schlüssel als Standardschlüssel definiert ist und durch das Mobilfunkgerät in Erwiderung auf einen Empfang einer allgemeinen Anforderung eines öffentlichen Schlüssels seitens des Terminals der Standardschlüssel als der öffentliche Schlüssel des Mobilfunkgeräts an das Terminal gesendet wird.

Nach dem obig beschrieben "Terminal-Authentisierung" erfolgt der Prozess der "Chip-Authentisierung", wobei jedoch auch hier zur Einsparung von Kommunikationsschritten der öffentliche Schlüssel des Mobilfunkgeräts automatisch und ohne eine vorherige explizite Anforderung seitens des Terminals gesendet wird. Das Mobilfunkgerät wird automatisch seinen einzelnen öffentlichen Schlüssel an das Terminal senden oder im Falle des Verfügens über mehrere verschiedene öffentliche Schlüssel einen seitens des Mobilfunkgeräts als "Standard" definierten öffentlichen Schlüssel an das Terminal senden. Das Terminal übermittelt also nicht mehr explizit die Referenz des Schlüssels, für den das Mobilfunkgerät die Kenntnis seines privaten Schlüssels beweisen soll.

Der eigentliche Beweis des Besitzes des zum öffentlichen Schlüssel des Mobilfunkgeräts zugehörigen privaten Schlüssels erfolgt durch die besagten Schritte des Berechnens des gemeinsamen zweiten Geheimnisses, des zufälligen dritten Geheimnisses und des symmetrischen Sitzungsschlüssels. Nur unter der Voraussetzung, dass das Mobilfunkgerät in der Lage ist, einen symmetrischen Sitzungsschlüssel zu berechnen, welcher mit einem in entsprechender Weise auf Seiten des Terminals berechneten symmetrischen Sitzungsschlüssel übereinstimmt, wird ein Kommunikationskanal zwischen Terminal und Mobilfunkgerät aufgebaut. Die Kommunikation über diesen Kommunikationskanal wird mit dem symmetrischen Sitzungsschlüssel verschlüsselt und erlaubt somit einen kryptographisch gesicherten Zugriff des Terminals auf das Attribut des Mobilfunkgeräts.

Nach einer Ausführungsform umfasst das Verfahren ferner:

- Senden eines Zertifikats des Mobilfunkgeräts an das Terminal,
- Verifizieren des Zertifikats, wobei die Authentisierung des Mobilfunkgeräts gegenüber dem Terminal unter der Voraussetzung eines positiven Verifizierens des Zertifikats erfolgt.

Diese Verifikation des Zertifikates des Mobilfunkgeräts wird auch als passive Authentisierung bezeichnet. Dadurch wird die Authentizität des Mobilfunkgeräts nachgewiesen. Zudem ermöglicht eine solche Authentisierung die Gültigkeit des Mobilfunkgeräts zu überprüfen, etwa indem geprüft wird, ob das Mobilfunkgerät gesperrt ist.

Nach einer Ausführungsform umfasst das Verifizieren des Zertifikats des Mobilfunkgeräts ferner:

- Auslesen einer Sperr-ID aus dem Zertifikat des Mobilfunkgeräts durch das Terminal,
- Senden einer Speeranfrage von dem Terminal an einen Sperrserver,
- Senden einer Sperrinformation von dem Sperrserver an das Terminal, wobei ein Zugriff des Terminals auf das Attribut nur unter der Voraussetzung erfolgt, dass die Sperrinformation anzeigt, dass das Mobilfunkgerät nicht gesperrt ist.

Ausführungsformen können den Vorteil haben, dass sie eine Sperrung des Mobilfunkgeräts sowie eine effiziente Prüfung des Mobilfunkgeräts auf eine Sperrung ermöglichen. Ergibt die Prüfung, dass das Mobilfunkgerät gesperrt ist, so wird das Verfahren abgebrochen und es erfolgt kein Auslesen des Attributs durch das Terminal. Somit wird dem Mobilfunkgerät aber auch kein Zugang zu bzw. über eine Sicherungseinrichtung zu einem durch diese gesicherten Bereich gewährt.

Nach Ausführungsformen wird der Sperrserver durch den Authentisierungsserver bereitgestellt.

Ein Sperren eines für einen Mobilfunkgerät erstellten Zertifikats ist beispielsweise notwendig, falls der dem Zertifikat zugeordnete Mobilfunkgerät abhandengekommen ist, gestohlen wurde oder dessen Einsatz aus sonstigen Gründen allgemein oder für bestimmte Anwendungen verhindert werden soll, um sicherzustellen, dass kein Missbrauch betrieben wird.

Nach einer Ausführungsform umfasst die Speeranfrage die Sperr-ID, der Sperrserver die Sperr-ID mit einer Sperrliste abgleicht und das Ergebnis des Abgleichs als Sperrinformation an das Terminal sendet. Bei der Sperrliste handelt es sich beispielsweise um eine Negativ- oder eine Positivliste. Dadurch, dass lediglich eine Sperr-ID und eine Sperrinformation, welche beispielweise mitteilt, dass das entsprechende Zertifikat gesperrt oder nicht gesperrt ist, wird das Datenübertragungsvolumen klein gehalten und die Kommunikationsgeschwindigkeit erhöht.

Nach einer Ausführungsform sendet der Sperrserver als Sperrinformation eine Sperrliste an das Terminal sendet, welches die Sperr-ID mit der empfangenen Sperrliste abgleicht. Nach Ausführungsformen sendet das Terminal zudem eine Versions-ID einer auf dem Terminal gespeicherten Sperrliste an den Sperrserver. Stimmt die Versions-ID der Sperrliste auf dem Sperrserver mit der vom Terminal empfangenen Versions-ID überein, so ist die Sperrliste des Terminals auf dem neuesten Stand und eine erneuet Übersendung kann eingesperrt werden. Stimmen die Versions-IDs nicht überein, bedeutet dies, dass die Sperrliste des Terminals veraltet ist. Diese veraltete Sperrliste wird daraufhin durch die mit der Sperrinformation übersendete Sperrliste ersetzt. Dadurch kann das Datenübertragungsvolumen klein gehalten und die Kommunikationsgeschwindigkeit erhöht werden.

Ausführungsformen betreffen zudem ein Mobilfunkgerät mit einer ersten Kommunikationsschnittstelle einer ersten Mobilfunkschnittstelle, einem ersten Prozessor und einem ersten computerlesbaren Speichermedium, wobei das erste Speichermedium eine Applikation mit computerlesbaren ersten Instruktionen enthält, welche bei Ausführung durch den ersten Prozessor die Durchführung der Verfahrensschritte des Mobilfunkgeräts nach einer der vorgenannten Ausführungsformen bewirken.

Nach Ausführungsformen handelt es sich bei dem ersten computerlesbaren Speichermedium um ein Sicherheitsmodul, auf welchem das Chipkartenbetriebssystem installiert ist, und wobei es sich bei der Applikation um eine Chipkartenapplikation handelt.

Ausführungsformen betreffen zudem ein System, welches umfasst ein Mobilfunkgerät nach einer der vorgenannten Ausführungsformen und ein Terminal mit einer zweiten Kommunikationsschnittstelle, einem zweiten Prozessor und einem zweiten computerlesbaren Speichermedium, wobei das zweite Speichermedium computerlesbare zweite Instruktionen enthält, welche bei Ausführung durch den zweiten Prozessor die Durchführung der Verfahrensschritte des Terminals nach einer der vorgenannten Ausführungsformen bewirken.

Nach Ausführungsformen umfasst das System ferner einen Authentisierungsserver mit einer dritten Kommunikationsschnittstelle, einem dritten Prozessor und einem dritten computerlesbaren Speichermedium, wobei das dritte Speichermedium computerlesbare dritte Instruktionen enthält, welche bei Ausführung durch den dritten Prozessor die Durchführung der Verfahrensschritte des Authentisierungsservers nach einer der vorgenannten Ausführungsformen bewirken.

Nach Ausführungsformen umfasst das System ferner einen Sperrserver mit einer vierten Kommunikationsschnittstelle, einem vierten Prozessor und einem vierten computerlesbaren Speichermedium, wobei das vierte Speichermedium computerlesbare vierte Instruktionen enthält, welche bei Ausführung durch den vierten Prozessor eine Sperrliste bereitstellt.

Nach Ausführungsformen umfasst das System ferner einen Fernwartungsserver mit einer zweiten Mobilfunkschnittstelle, einem fünften Prozessor und einem fünften computerlesbaren Speichermedium, wobei das fünfte Speichermedium ein Fernwartungsmodul umfasst, welches dazu konfiguriert ist, Einstellungen und/oder Programme des Mobilfunkgeräts über ein Mobilfunknetz zu konfigurieren.

Ausführungsformen betreffen zudem ein Verfahren zur Freigabe eines Zugriffs auf eine zugriffsbeschränkte Sicherungseinrichtung, wobei das Verfahren umfasst:

- Durchführen des Verfahrens nach einer der vorgenannten Ausführungsformen,
- nach Freigabe des Zugriffs des Terminals auf das Attribut, Lesen des Attributs durch das Terminal und versenden einer Zugriffsanfrage an einen Zugangsmanagementserver, wobei die Zugriffsanfrage das Attribut verschlüsselt umfasst,
- Entschlüsseln und Verifizieren des Attributs durch den Zugangsmanagementserver, wobei der Zugangsmanagementserver im Falle eines erfolgreichen Verifizierens den Zugang zu der Sicherungseinrichtung freigibt.

Ausführungsformen betreffen zudem ein Sicherheitssystem umfassend ein System nach einer der vorgenannten Ausführungsformen, sowie eine zugriffsbeschränkte Sicherungseinrichtung und einen Zugangsmanagementserver,

- wobei das Terminal dazu konfiguriert ist, nach Freigabe des Zugriffs des Terminals auf das Attribut das Attribut zu lesen und eine Zugriffsanfrage an den Zugangsmanagementserver zu versenden, wobei die Zugriffsanfrage das Attribut verschlüsselt umfasst,
- wobei der Zugangsmanagementserver dazu konfiguriert ist, eine Entschlüsselung und Überprüfung des Attributs durchzuführen und im Fall einer erfolgreichen Überprüfung den Zugang zu der Sicherungseinrichtung freizugeben.

Nach Ausführungsformen umfasst die Sicherungseinrichtung ferner eine Zugangskontrolleinrichtung mit einer Verriegelungsanlage und die Sicherungseinrichtung ist dazu konfiguriert auf eine Freigabe des Zugangs zu der Sicherungseinrichtung hin die Verriegelungsanlage der Zugangskontrolleinrichtung zu entriegeln.

Im Weiteren werden Ausführungsformen der Erfindung mit Bezugnahme auf die Zeichnungen näher erläutert. Es zeigen:

Figur 1    ein schematisches Blockdiagramm eines ersten beispielhaften Sicherheitssystems,

Figur 2    ein schematisches Blockdiagramm eines zweiten beispielhaften Sicherheitssystems,

Figur 3    ein Flussdiagramm eines beispielhaften Verfahrens zur Freigabe eines Zugriffs auf eine zugriffsbeschränkte Sicherungseinrichtung,

Figur 4    ein Flussdiagramm eines beispielhaften Verfahrens zur Kontrolle eines Zugriffs auf das Mobilfunkgerät in dem Sicherheitssystem aus Figur 1,

Figur 5    ein Flussdiagramm eines beispielhaften Verfahrens zur Kontrolle eines Zugriffs auf das Mobilfunkgerät in dem Sicherheitssystem aus Figur 2,

Figur 6    ein UML-Diagramm des beispielhaften Verfahrens aus Figur 4,

Figur 7    ein UML-Diagramm des beispielhaften Verfahrens aus Figur 5,

Figur 8    ein schematisches Blockdiagramm eines beispielhaften Mobilfunksystems.

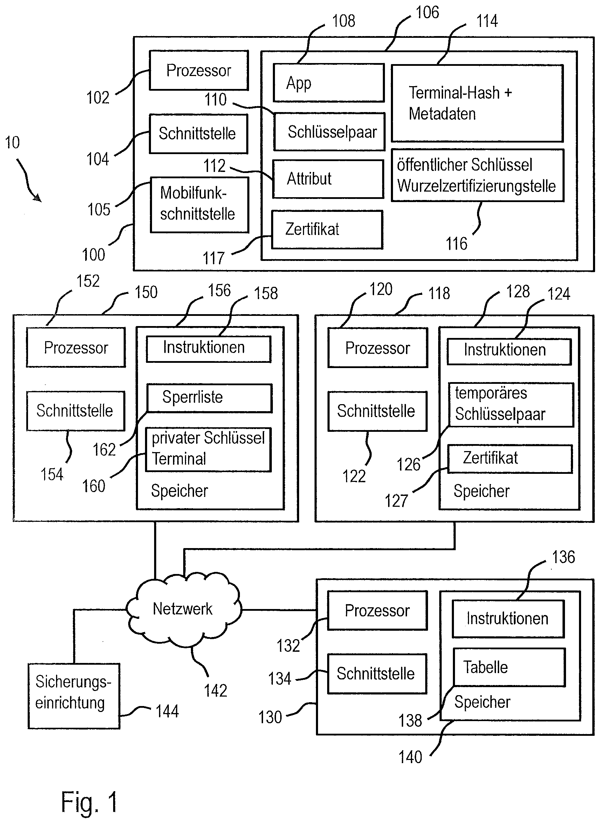

Die Figur 1 zeigt ein Blockdiagramm eines ersten beispielhaften Sicherheitssystems 10 umfassend einen Mobilfunkgerät 100, ein Terminal 118, einen Authentisierungsserver 150, einen Zugangsmanagementserver 130 sowie eine Sicherungseinrichtung 144. Das Mobilfunkgerät 100 kann mit dem Terminal 118 über eine interne kontaktbehaftete oder kontaktlose Schnittstelle 104 auf Seiten des Mobilfunkgeräts 100 und eine komplementäre Schnittstelle 122 seitens des Terminals 118 kommunizieren. Hierbei kann es sich insbesondere um eine Nahfeldkommunikation, beispielsweise mittels RFID, oder Bluetooth oder WLAN handeln. Beispielsweise erfolgt die Kommunikation zwischen dem Terminal 118 und dem Mobilfunkgerät 100 entsprechend der Norm ISO 14443 drahtlos mit einer Frequenz von 13,56 MHz.

Die Schnittstelle 122 des Terminals 118, die Schnittstelle 134 des Zugangsmanagementservers 130 und eine nicht weiter gezeigte Schnittstelle der Sicherungseinrichtung 144 können über ein Netzwerk 142 zur Kommunikation und Datenübertragung untereinander verwendet werden. Bei dem Netzwerk 142 kann es sich beispielsweise um das Internet oder ein Intranet handeln.

Die Sicherungseinrichtung 144 dient zur Sicherung des Zugriffs auf oder des Zutritts zu einem sensitiven Bereich. Beispielsweise kann es sich bei diesem Bereich um einen räumlichen Bereich handeln und bei der Sicherungseinrichtung 144 um eine Zugangskontrolleinrichtung mit einer Verriegelungsanlage, beispielweise eine Türe oder Schranke mit einem entsprechenden elektronischen Schloss. So kann beispielsweise eine Freigabe eines Öffnens der Türe zu dem räumlichen Bereich durch die Sicherungseinrichtung 144 gesteuert werden. In einem anderen Beispiel dient die Sicherungseinrichtung 144 zum Schutz von Daten, welche in einer Datenbank gespeichert sind. In diesem Fall kontrolliert die Sicherungseinrichtung 144 den Zugriff auf die in der Datenbank gespeicherten Daten.

Das Mobilfunkgerät 100 dient als "Schlüssel", um Zugriff auf die Sicherungseinrichtung 144 und Zutritt zu dem von der Sicherungseinrichtung 144 gesicherten Bereich zu erlangen. Hierzu verfügt ein Speicher 106 des Mobilfunkgeräts 100 über ein Attribut 112, welches, wie nachfolgend erläutert wird, an den Zugangsmanagementserver 130 übertragen wird. Das Attribut 112 ist beispielsweise in einem geschützten Speicherbereich des Speichers 106 gespeichert. Ein "geschützter Speicherbereich" kann z.B. ein Datenspeicher eines Datenverarbeitungsgeräts sein, auf welchen nur ein auf diesem Datenverarbeitungsgerät integrierter Prozessor Zugriff hat. Alternativ oder zusätzlich dazu kann der Speicher durch weitere Sicherheitsmaßnahmen vor unberechtigtem Zugriff auf die darin gespeicherten Daten geschützt sein, etwa durch kryptographische Sicherheitsvorkehrungen oder Mechanismen, die eine mechanische Zerstörung des Speichers im Falle eines unberechtigten Zugriffsversuchs bewirken. Das Attribut 112 wird vom Zugangsmanagementserver 130 dazu verwendet, über die Freigabe des Zugriffs auf Sicherungseinrichtung 144 für den Nutzer des Mobilfunkgeräts 100 zu entscheiden. Das nachfolgend beschriebene Verfahren stellt dabei sicher, dass zwischen dem Mobilfunkgerät 100 und dem Terminal 118 ein inertiales Vertrauensverhältnis hergestellt wird, welches einen sicheren gegenseitigen Datenaustausch zur Abfrage und Übermittlung des Attributs 112 ermöglicht.

In dem Speicher 106 ist zudem eine Chipkartenapplikation 108 gespeichert, welche Instruktionen umfasst, die bei Ausführung durch den Prozessor 102 das Mobilfunkgerät veranlassen ein erfindungsgemäßes Verfahren auszuführen. Zudem ist ein Zugriffstoken in Form eines Hash-Werts 114 mit Metadaten gespeichert, ein öffentlicher Schlüssel 116 einer Wurzelzertifizierungsstelle sowie ein asymmetrisches Schlüsselpaar 110 des Mobilfunkgeräts, welches einen öffentlichen und einen privaten Schlüssel umfasst. Zumindest der private Schlüssel ist vorteilhafter Weise ebenfalls in einem geschützten Bereich des Speichers 106 gespeichert. Des Weiteren ist ein dem Mobilfunkgerät 100 zugeordnetes Zertifikat 117 in dem Speicher 106 gespeichert.

Das Terminal 118 umfasst neben der Schnittstelle 122 und dem Prozessor 120 einen Speicher 128, in welchem Instruktionen 124 gespeichert sind. Durch Ausführung der Instruktionen 124 durch den Prozessor 120 wird das Terminal 118 dazu veranlasst ein erfindungsgemäßes Verfahren auszuführen. Zudem umfasst der Speicher 128 ein durch das Terminal 118 erzeugtes temporäres asymmetrisches Schlüsselpaar 126, welches einen temporären öffentlichen und einen temporären privaten Schlüssel umfasst, sowie die Zertifikate 127 des Terminals 118.

Der Authentisierungsserver 150 umfasst neben der Schnittstelle 154 einen Speicher 156, in welchem Instruktionen 158 gespeichert sind. Durch Ausführung der Instruktionen 158 durch den Prozessor 152 wird der Authentisierungsserver 150 dazu veranlasst ein erfindungsgemäßes Verfahren auszuführen. Zudem umfasst der Speicher 156 eine Speerliste 162 und zumindest einen privaten kryptographischen Schlüssel 160, welcher dem Terminal 118 zugeordnet ist. Die Speerliste 162 kann als Negativliste oder als Positivliste ausgestaltet sein. Der private Schlüssel 160 ist nach Ausführungsformen in einem geschützten Speicherbereich des Speichers 156 gespeichert. Nach Ausführungsformen sendet der Authentisierungsserver 150 auf eine entsprechende Anfrage des Terminals 118 hin die Sperrliste 162 an das Terminal, sodass dieses ein empfangenes Zertifikat 117 des Mobilfunkgeräts 100 auf seine Gültigkeit hin prüfen kann. Nach Ausführungsformen prüft der Authentisierungsserver 150 auf eine entsprechende Anfrage des Terminals 118 oder des Mobilfunkgeräts hin anhand der Sperrliste 162, ob ein Zertifikat 117 des Mobilfunkgeräts 100 bzw. ein Zertifikat 127 des Terminals 118 gültig ist. Das Ergebnis der entsprechenden Prüfung wird vom Authentisierungsserver 150 als Antwort an das Terminal 118 bzw. das Mobilfunkgerät 100 gesandt. An das Mobilfunkgerät 100 wird die Antwort nach Ausführungsformen über das Terminal 118 gesandt.

Der Zugangsmanagementserver 130 umfasst neben der Schnittstelle 134 und dem Prozessor 132 einen Speicher 140, in welchem Instruktionen 136 gespeichert sind. Durch Ausführung der Instruktionen 136 durch den Prozessor 132 wird der Zugangsmanagementserver 130 dazu veranlasst ein erfindungsgemäßes Verfahren auszuführen. Zudem umfasst der Speicher 140 eine Tabelle 138, in der gültige Attribute gespeichert sind zum Abgleich mit dem durch das Terminal 118 aus dem Mobilfunkgerät 100 ausgelesenen Attribut 112. Die Tabelle 138 ist nach Ausführungsformen in einem geschützten Speicherbereich des Speichers 140 gespeichert.

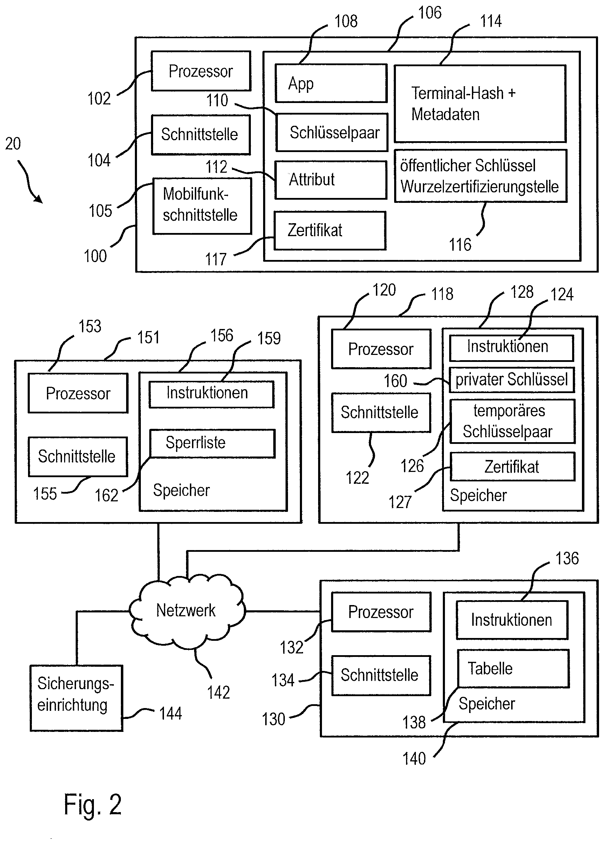

Die Figur 2 zeigt ein Blockdiagramm eines zweiten beispielhaften Sicherheitssystems 20. Das Sicherheitssystem 20 unterscheidet sich von dem Sicherheitssystem in 10 aus Figur 1 darin, dass anstelle eines Authentisierungsserver 150 mit Sperrfunktion lediglich ein Speerserver 151 vorgesehen ist. Der Sperrserver 151 umfasst neben der Schnittstelle 155 einen Speicher 157, in welchem Instruktionen 159 gespeichert sind. Durch Ausführung der Instruktionen 159 durch den Prozessor 153 wird der Sperrserver 151 dazu veranlasst eine Sperrliste 162 zu verwalten. Die Speerliste 162 kann als Negativliste oder als Positivliste ausgestaltet sein. Nach Ausführungsformen sendet der Sperrserver 151 auf eine entsprechende Anfrage des Terminals 118 hin die Sperrliste 162 an das Terminal, sodass dieses ein empfangenes Zertifikat 117 des Mobilfunkgeräts 100 auf seine Gültigkeit hin prüfen kann. Nach Ausführungsformen prüft der Sperrserver 151 auf eine entsprechende Anfrage des Terminals 118 oder des Mobilfunkgeräts hin anhand der Sperrliste 162, ob ein Zertifikat 117 des Mobilfunkgeräts 100 bzw. ein Zertifikat 127 des Terminals 118 gültig ist. Das Ergebnis der entsprechenden Prüfung wird vom Sperrserver 151 als Antwort an das Terminal 118 bzw. das Mobilfunkgerät 100 gesandt. An das Mobilfunkgerät 100 wird die Antwort nach Ausführungsformen über das Terminal 118 gesandt.

In der in Figur 2 gezeigten Ausführungsform des Sicherheitssystems 20 umfasst der Speicher 128 des Terminals 118 privaten kryptographischen Schlüssel 160, welcher dem Terminal 118 zugeordnet ist. Nach Ausführungsformen ist der private Schlüssel 160 in einem geschützten Speicherbereich des Speichers 128 gespeichert. Im Falle des Sicherheitssystems 20 erfolgt im Zuge der Authentisierung des Terminals 118 das Erstellen einer zweiten Signatur eines zufälligen ersten Geheimnisses mit dem dem Terminal 118 zugeordneten statischen privaten Schlüssel 160 und dem sitzungsgebundenen temporären öffentlichen Schlüssel des Terminals 118 durch das Terminal 118 selbst.

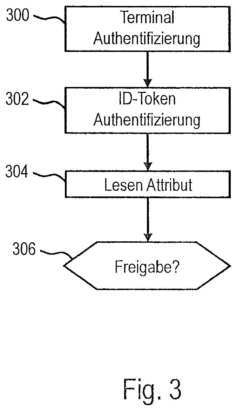

Die Figur 3 zeigt ein Flussdiagramm eines beispielhaften mehrstufigen Verfahrens zur Freigabe des Zugriffs auf eine zugriffsbeschränkte Sicherungseinrichtung 144 mittels eines Mobilfunkgeräts 100. Das in Figur 3 gezeigte Verfahren ist sowohl mit dem Sicherheitssystem 10 aus Figur 1 als auch mit dem Sicherheitssystem 20 aus Figur 2 ausführbar.

In Schritt 300 erfolgt eine sogenannte Terminal-Authentisierung, wobei das Terminal 118 ein Zugriffstoken an das Mobilfunkgerät 100, beispielsweise eine Chipkarte, überträgt und das Mobilfunkgerät 118 das übertragene Zugriffstoken validiert. Ein solches Zugriffstoken kann beispielsweise ein Hash-Wert eines permanenten Zertifikats des Terminals 118 sein. In diesem Fall überträgt das Terminal 118 des Zugriffstokens beispielsweise in Form des entsprechenden permanenten Zertifikats, aus welchem das Mobilfunkgerät 100 den entsprechenden Hash-Wert ableitet. Im Zuge der Validierung prüft das Mobilfunkgerät 100, ob das Zugriffstoken, z.B. der aus dem permanenten Zertifikat abgeleitete Hash-Wert, bereits in dem Mobilfunkgerät 100 als gültig gespeichert ist. Die Validierung ist erfolgreich, falls ein mit dem aus dem empfangenen Zertifikat abgeleiteter Hash-Wert mit einem gültigen, in dem Mobilfunkgerät 100 gespeicherten Hash-Wert übereinstimmt. Umfasst die Validierung eine Verifizierung mittels eines im Mobilfunkgerät 100 installierten Wurzelzertifikats, muss das Terminal 118 das oder die Zertifikate übertragen, welche eine solche Verifizierung mittels des im Mobilfunkgerät 100 installierten Wurzelzertifikats ermögliche. Eine erfolgreiche Validierung des Zertifikats bedeutet für das Mobilfunkgerät 100, dass das Terminal 118 für einen weiteren Datenaustausch vertrauenswürdig ist. Dies ist daher die Grundvoraussetzung für die Durchführung der weiteren Schritte 302 bis 306.

Die Mobilfunkgerät-Authentisierung in Schritt 302, auch Chip-Authentisierung genannt, dient dem Nachweis, dass das Mobilfunkgerät 100 den privaten Schlüssel zu seinem dem Terminal 118 zur Verfügung gestellten öffentlichen Schlüssel kennt. Falls dieser öffentliche Schlüssel in dem Mobilfunkgerät 100 durch den Ausweisaussteller signiert vorliegt, bedeutet der erfolgreiche Abschluss des Protokolls zwischen Terminal 118 und Mobilfunkgerät 100, dass das Mobilfunkgerät 100 echt und nicht gefälscht ist.

Erst wenn die Schritte 300 und 302 erfolgreich abgeschlossen sind, kann das Terminal 118 in Schritt 304 das Attribut 112 aus dem Speicher 106 des Mobilfunkgeräts 100 auslesen und mittels einer verschlüsselten Kommunikation, beispielsweise mittels einer Ende-zu-Ende-Verschlüsselung, dem Zugangsmanagementserver 130 über das Netzwerk 142 zur Verfügung stellen. Der Zugangsmanagementserver 130 verfügt über einen Prozessor 132 und einen Speicher 140, wobei der Speicher 140 Programminstruktionen 136 aufweist. Die Programminstruktionen 136 dienen zum einen der verschlüsselten Kommunikation mit dem Terminal 118 über die Schnittstelle 134 und sie dienen zum anderen dazu, das Attribut 112 nach Empfang mit Attributen abzugleichen, die in der Tabelle 138 gespeichert sind. Die Tabelle 138 enthält beispielsweise eine Vielzahl von Attributen, welche zugehörige Mobilfunkgerät 100 und/oder einen dem entsprechenden Token 100 zugeordneten Nutzer in eindeutiger Weise identifizieren. Die in der Tabelle 138 gespeicherten Attribute identifizieren dabei diejenigen Mobilfunkgerät 100 und/oder zugehörigen Nutzer, denen der Zugriff auf die Sicherungseinrichtung 144 gewährt wird.

Nachdem also im Schritt 304 nach der Terminal-Authentisierung und der Mobilfunkgerät-Authentisierung das Attribut 112 gelesen wurde, findet in Schritt 306 mittels der Programminstruktionen 136 seitens des Zugangsmanagementservers 130 eine Überprüfung statt, ob eine Freigabe des Zugriffs auf die Sicherungseinrichtung 144 erteilt werden darf oder nicht. Findet sich im vorliegenden Beispiel das Attribut 112 in der Tabelle 138 hinterlegt, wird die Freigabe erteilt. Daraufhin wird beispielsweise zur Entriegelung einer Verriegelungsanlage einer Zugangskotrolleinrichtung wie etwa eine Tür an die Sicherungseinrichtung 144 ein Entriegelungssignal über das Netzwerk 142 gesendet. Im Fall des Zugriffs auf Daten wird ein entsprechendes Zugriffsfreigabesignal für die Freigabe eines Datenzugriffs an die Sicherungseinrichtung 144 übermittelt und die Sicherungseinrichtung erteilt daraufhin die Freigabe eines Zugriffs beispielsweise auf sensitive Bereiche einer Datenbank.

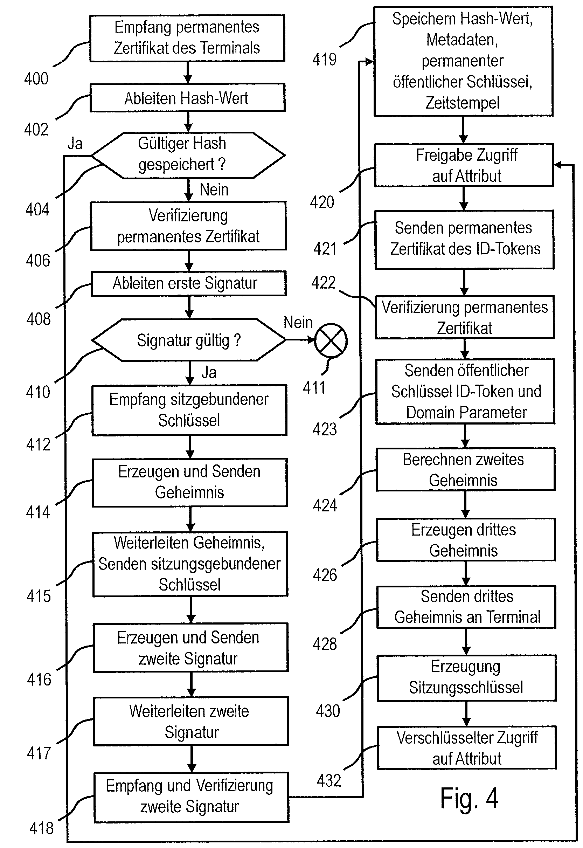

Bezugnehmend auf das Flussdiagramm, welches in Figur 4 gezeigt ist, sei im Folgenden beispielhaft erläutert, wie die obig beschriebene Terminal-Authentisierung und Mobilfunkgerät-Authentisierung ablaufen können. Figur 4 zeigt für das Sicherheitssystem 10 aus Figur 1 ein Flussdiagramm eines beispielhaften Verfahrens zur Kontrolle des Zugriffs eines Terminals 118 auf ein in einem Mobilfunkgerät 100 gespeichertes Attribut 112. Zunächst empfängt in Schritt 400 das Mobilfunkgerät 100 über seine Schnittstelle 104 ein permanentes Zertifikat des Terminals 118. Aus dem permanenten Zertifikat wird durch das Mobilfunkgerät 100 in Schritt 402 ein Zugriffstoken in Form eines Hash-Werts abgeleitet. Das permanente Zertifikat umfasst beispielsweise den besagten Hash-Wert sowie eine Signatur, welche aus dem HashWert und einem privaten Signaturschlüssel sowie optionalen Metadaten gebildet wurde. Beispielsweise gilt, dass mittels eines dem permanenten Zertifikat zugehörigen öffentlichen Schlüssels eine Authentisierung des Terminals 118 möglich ist.

In Schritt 404 wird überprüft, ob der Hash-Wert bereits als gültiger Hash-Wert 114 in dem Speicher 106 gespeichert ist. Im Folgenden wird beispielhaft davon ausgegangen, dass der in Schritt 402 durch das Mobilfunkgerät 100 abgeleitete Hash-Wert noch nicht in dem Speicher 106 als gültiger Hash-Wert 114, d.h. Zugriffstoken, zusammen mit den zugehörigen Metadaten gespeichert ist. Diese Überprüfung erfolgt beispielsweise mittels eines Prozessors 102 des Mobilfunkgeräts 100, wobei in dem Speicher 106 Programminstruktionen einer Chipkartenapplikation 108 enthalten sind, mittels welcher sämtliche bezüglich des Mobilfunkgeräts 100 beschriebenen Schritte durchgeführt werden können.

Nachdem unter dieser Voraussetzung in Schritt 404 festgestellt wurde, dass der Hash-Wert 114 in dem Mobilfunkgerät 100 nicht gespeichert ist, erfolgt in den nachfolgenden Schritten eine vollständige Authentisierung des Terminals 118 durch das Mobilfunkgerät 100. In Schritt 406 erfolgt eine Verifizierung des permanenten Zertifikats, wobei eine erste aus dem permanenten Zertifikat des Terminals 118, welches in Schritt 400 empfangen wurde, abgeleitete Signatur mit dem Hash-Wert und einem dem permanenten Zertifikat zugehörigen statischen öffentlichen Schlüssel des Terminals 118 verifiziert wird. Der zugehörige statische öffentliche Schlüssel des Terminals 118 kann ebenfalls zusammen mit dem Zertifikat oder in dem Zertifikat des Terminals 118 in Schritt 400 empfangen werden. Das Ableiten der ersten Signatur und die Verifizierung der ersten Signatur sind in den Schritten 408 und 410 gezeigt.

Optional ist es möglich, dass das permanente Zertifikat in Schritt 400 in einer von dem Terminal 118 gesendeten Nachricht empfangen wird, wobei diese Nachricht ferner ein Wurzelzertifikat einer Wurzelzertifizierungsstelle umfasst. Das permanente Zertifikat des Terminals 118 kann dann nach Schritt 404 zusätzlich über das Wurzelzertifikat mittels eines in dem Mobilfunkgerät 100 im Speicher 106 gespeicherten öffentlichen Schlüssels 116 einer Wurzelzertifizierungsstelle verifiziert werden. Damit kann sichergestellt werden, dass der statische öffentliche Schlüssel des Terminals 118 vertrauenswürdig ist.

Sofern im Schritt 410 festgestellt wird, dass die erste Signatur gültig ist und zudem optional auch die Vertrauenswürdigkeit das permanente Zertifikat des Terminals 118 bestätigt wurde, wird das Verfahren fortgesetzt. Ansonsten kommt es nach Schritt 410 zu einem Abbruch 411 des Authentisierungsverfahrens, womit die Authentisierung fehlgeschlagen ist.

Wird das Verfahren fortgesetzt, so wird in Schritt 412 ein sitzungsgebundener temporärer öffentlicher Schlüssel vom Terminal 118 an das Mobilfunkgerät gesendet. Der sitzungsgebundene temporäre öffentliche Schlüssel des Terminals 118 ist dabei ein für die aktuelle Kommunikationssitzung zwischen Mobilfunkgerät 100 und Terminal 118 erzeugter kryptographischer Schlüssel.

Auf den Empfang des sitzungsgebundenen temporären öffentlichen Schlüssels in Schritt 412 hin erfolgt in Schritt 414 das Erzeugen und Senden eines zufälligen ersten Geheimnisses von dem Mobilfunkgerät 100 an das Terminal 118. Dieses zufällige erste Geheimnis wird auch als "challenge" bezeichnet. Es ist an dem Terminal 118 die mit dem privaten Schlüssel 160 des Terminals 118 signierte "challenge" als "response", d.h. Antwort, an das Mobilfunkgerät zurückzusenden. Damit weist das Terminal 118 nach, dass es Zugriff auf den privaten Schlüssel 160 hat.

Nach dem in Schritt 414 das Mobilfunkgerät 100 das erste Geheimnis erzeugt und an das Terminal 118 gesendet hat, wird das Geheimnis in Schritt 415 von dem Terminal 118 an den Authentisierungsserver 150 weitergeleitet. In einem geschützten Speicherbereich des Speichers 156 ist ein dem Terminal 118 zugeordneter statischer privater Schlüssel 160 gespeichert. Der Authentisierungsserver 150 erzeugt auf den Empfang des ersten Geheimnisses hin in Schritt 416 eine Signatur unter Verwendung des statischen privaten Schlüssels 160, eines sitzungsgebundenen temporären öffentlichen Schlüssels des Terminals 118, welchen das Terminal 118 ebenfalls an den Authentisierungsserver 150 sendet (beispielsweise in Schritt 415), sowie des entsprechenden ersten Geheimnisses. Der Authentisierungsserver 150 übermittelt die so erzeugte "response" in Form der Signatur an das Terminal 118, welches die empfangene Signatur in Schritt 417 an das Mobilfunkgerät 100 weiterleitet. In Schritt 418 empfängt und verifiziert das Mobilfunkgerät 100 die "response". Die Verifizierung der vom Terminal 118 empfangenen Signatur erfolgt durch das Mobilfunkgerät 100 unter Verwendung des ersten Geheimnisses, des dem permanenten Zertifikat zugehörigen öffentlichen Schlüssels des Terminals 118 und dem sitzungsgebundenen temporären öffentlichen Schlüssel des Terminals 118, welchen das Terminal 118 in Schritt 412 empfangen hat.

Im Falle einer erfolgreichen Verifizierung dieser zweiten Signatur erfolgt in Schritt 419 ein Speichern des in Schritt 402 abgeleiteten Hash-Wertes zusammen mit den Metadaten, dem statischen öffentlichen Schlüssel des Terminals und einem optionalen Zeitstempel in dem Mobilfunkgerät 100. Auf Schritt 419 folgt in Schritt 420 schließlich die Freigabe des Zugriffs durch das Terminal 118 auf das Attribut 112.

Vor dem Ausführen des tatsächlichen Zugriffs durch das Terminal 118 auf das Attribut 112, wird in den nachfolgenden Schritten zusätzliche eine Mobilfunkgerät-Authentisierung, auch bezeichnet als Chip-Authentisierung, entsprechend dem Schritt 302 der Figur 3 durchgeführt. Vor der Mobilfunkgerät-Authentisierung empfängt das Terminal 118 zunächst in Schritt 421 ein permanentes Zertifikat des Mobilfunkgeräts 100. In Schritt 422 verifiziert das Terminal 118 das empfangene Zertifikat des Mobilfunkgeräts 118 durch Prüfen der zugehörigen Dokumenten-PKI. Zudem kann das Terminal 118 prüfen, ob das Zertifikat des Mobilfunkgeräts gesperrt ist. Hierzu liest das Terminal 118 eine Sperr-ID aus dem Zertifikat des Mobilfunkgeräts aus und sendet eine Sperranfrage an den Authentisierungsserver 150. Der Authentisierungsserver 150, der Zugriff auf eine beispielsweise in dem Speicher 156 gespeicherte Sperrliste 162 besitz, antwortet mit einer Sperrinformation. Aus der Sperrinformation kann das Terminal 118 ableiten, ob das Zertifikat des Mobilfunkgeräts 100 gesperrt ist. Bei der Sperrliste 162 handelt es sich beispielsweise um eine Negativoder Positivliste. Das Zertifikat gilt als gesperrt, wenn die Speerliste 162 als Negativliste die Sperr-ID des Zertifikats umfasst oder wenn die Speerliste 162 als Positivliste die Sperr-ID des Zertifikats nicht umfasst. Nach einer Ausführungsform sendet das Terminal 118 die Speer-ID als Teil der Speeranfrage an den Authentisierungsserver 150 und erhält als Antwort eine Sperrinformation, die anzeigt ob das Zertifikat gesperrt ist. Hierzu gleicht der Authentisierungsserver 150 die vom Terminal 118 empfangene Sperr-ID mit den in der Sperrliste 162 enthaltenen Sperr-IDs ab. Diese Abfrage des Sperrstatus kann beispielsweise auch mittels "Online Certificate Status Protocol" (OCSP) erfolgen, wobei der Authentisierungsserver 150 als Validierungsdienst auftritt. OSCP ist ein Netzwerkprotokoll, das es Clients ermöglicht, den Status von X.509-Zertifikaten bei einem Validierungsdienst abzufragen. Nach einer weiteren Ausführungsform umfasst die Sperrinformation die aktuelle Sperrliste 162, sodass das Terminal 118 selbst die ausgelesene Sperr-ID mit den in der vom Authentisierungsserver 150 empfangenen Sperrliste 162 enthaltenen Sperr-IDs abgleichen kann. Unter der Voraussetzung, dass das permanente Zertifikat des Mobilfunkgeräts 100 nicht gesperrt ist, wird das Verfahren fortgesetzt.

Auf eine positive Verifizierung in Schritt 422 hin wird in den nachfolgenden Schritten die Mobilfunkgerät-Authentisierung ausgeführt. Hierzu sendet das Mobilfunkgerät in Schritt 423 seinen öffentlichen Schlüssel und einen für elektrische Kurvenkryptografie notwendigen Domainparameter an das Terminal 118. Im Gegenzug verfügt das Mobilfunkgerät 100 bereits über den sitzungsgebundenen temporären öffentlichen Schlüssel des Terminals 118. Dies ermöglicht es sowohl dem Mobilfunkgerät 100 als auch dem Terminal 118, in Schritt 424 jeweils ein zweites Geheimnis zu erzeugen. Auf Seiten des Mobilfunkgeräts 100 gehen in die Berechnung des zweiten Geheimnisses der private Schlüssel des Mobilfunkgeräts 100, der sitzungsgebundene öffentliche Schlüssel des Terminals 118 und der Domainparameter ein. Auf Seiten des Terminals gehen in die Berechnungen des zweiten Geheimnisses der sitzungsgebundene private Schlüssel des Terminals 100, der öffentliche Schlüssel des Mobilfunkgeräts 118 und der Domainparameter ein. Es wird also auf jeder Seite unabhängig voneinander das gleiche zweite Geheimnis erzeugt.

Nachdem beide Seiten jeweils das gemeinsame zweite Geheimnis berechnet haben, erzeugt das Mobilfunkgerät 100 in Schritt 426 ein drittes zufälliges Geheimnis und leitet aus diesem dritten Geheimnis in Schritt 430 unter Verwendung des zweiten Geheimnisses einen Sitzungsschlüssel ab. Zudem wird in Schritt 428 das dritte Geheimnis an das Terminal 118 übermittelt. Das Terminal 118 selbst kann unter Verwendung des von ihm berechneten zweiten Geheimnisses und des nun empfangenen dritten Geheimnisses ebenfalls den Sitzungsschlüssel erzeugen. Bei den Sitzungsschlüsseln handelt es sich somit um ein Paar symmetrischer Schlüssel.

Anschließend erfolgt in Schritt 432 ein verschlüsselter Zugriff durch das Terminal auf das Attribut, wobei die Verschlüsselung in Form einer Ende-zu-Ende-Verschlüsselung unter Verwendung der symmetrischen Sitzungsschlüssel erfolgt. Unter einer "Ende-zu-Ende-Verschlüsselung" wird eine Verschlüsselung übertragener Daten über alle Übertragungsstationen hinweg verstanden, wobei die zu übertragenden Daten durch den Sender verschlüsselt und erst durch den Empfänger wieder entschlüsselt werden.

Wird nun das Mobilfunkgerät 100 in mehreren zeitlich auseinanderliegenden Sitzungen zum Zugriff auf die Sicherungseinrichtung 144 verwendet, kann eine modifizierte verkürzte Authentisierung des Terminals 118 durch das Mobilfunkgerät 100 zum Einsatz kommen. Beispielsweise kann bei einem erstmaligen Zugriff auf die Sicherungseinrichtung 144 das Protokoll der Terminal-Authentisierung vollständig mit den obengenannten Schritten 406 bis 419 zum Einsatz kommen. Bei jedem weiteren Versuch mittels des Mobilfunkgeräts 100 Zugriff auf die Sicherungseinrichtung 144 zu erlangen, kommt die verkürzte Authentisierung des Terminals 118 zum Einsatz. Hierzu ist vorgesehen, dass das Mobilfunkgerät 100 nach Ableiten des Hash-Werts in Schritt 402 seinen Speicher 106 dahingehend überprüft, ob der Hash-Wert bereits als ein aus einer früheren Authentisierung resultierender gültiger Hash-Wert 114 gespeichert ist. Ist dies der Fall, so wird anstelle von Schritt 406 direkt mit dem Schritt 420 und der Chip-Authentisierung fortgefahren.

Um nach einer einmaligen Terminal-Authentisierung nicht für alle Zeit die Vertrauenswürdigkeit des Terminals 118 annehmen zu müssen, kann insbesondere der Hash-Wert zusammen mit einem Ablaufdatum, -zeitpunkt oder einer Gültigkeitsdauer in dem Mobilfunkgerät 100 gespeichert werden. Der Hash-Wert wird also mit einem Zeitstempel verknüpft in dem Mobilfunkgerät 100 abgelegt. Der Zeitstempel kann beispielsweise ein Ablaufdatum des Hash-Wertes angeben. Ist dieses Ablaufdatum zeitlich überschritten, so wird trotz des Vorhandenseins des Hash-Werts 114 im Speicher 106 des Mobilfunkgeräts 100 für diesen gespeicherten Hash-Wert 114 keine Gültigkeit mehr gegeben sein, sodass Schritte 404 folgend die erneute Durchführung der Authentisierung des Terminals 118 mit den Schritten 406 bis 419 erfolgen muss.

Die Gültigkeitsdauer des Zugriffstokens, bzw. des Hash-Wert 114, kann auch in Form einer maximalen Anzahl von zeitlich auseinanderliegenden Sitzungen festgelegt sein. Dabei wird die Anzahl an Sitzungen, für die der Hash-Wert 114 verwendet wird, mitgezählt und abgespeichert. Erst nach dem Erreichen dieser maximalen Anzahl von Sitzungen wird eine erneute vollständige Authentisierung notwendig.

Zudem kann vorgesehen sein, dass zusammen mit dem Hash-Wert Metadaten 114 in dem Speicher 106 des Mobilfunkgeräts 100 gespeichert werden, bzw. vom HashWert umfasst werden. Gegebenenfalls kann auch nur ein Teil der Metadaten dort gespeichert werden. Die Metadaten können beispielsweise eine Zugriffsberechtigung angeben, die festlegt auf welche der im Speicher 106 befindlichen Attribute 112 das Terminal 118 zugreifen darf. Im Zuge der Prüfung in Schritt 404, ob ein dem Terminal 118 zugehöriger gültiger Hash-Wert im Mobilfunkgerät 100 gespeichert ist, können zusätzlich die mit dem Hash-Wert verknüpft gespeicherten Metadaten aus dem Speicher 106 geprüft werden. Diese Metadaten können gelesen und für die weitere Kommunikation mit dem Terminal 118 herangezogen werden. Neben Zugriffsberechtigungen des Terminals können die Metadaten beispielweise auch eine eindeutig ID, eine sog. "unique identifier" (UID) des Terminals umfassen. Bei der eindeutigen ID kann es sich beispielsweise um eine Seriennummer oder eine Zufallszahl handeln.

Zudem kann der statische öffentliche Schlüssel des Terminals verknüpft mit dem Hash-Wert im Speicher 106 gespeichert sein. Im Zuge von Schritt 404 oder nachfolgend kann dieser mit dem Hash-Wert verknüpft gespeicherte öffentliche Schlüssel gelesen und ebenfalls für die weitere Kommunikation mit dem Terminal verwendet werden.

Alle in dieser Beschreibung genannten kryptographischen Schlüssel werden je nach Anforderung in komprimierter oder unkomprimierter Form verwendet. Dabei ist der Fachmann ist dazu in der Lage sowohl mit komprimierten als auch mit unkomprimierten Formen der genannten kryptographischen Schlüssel zu arbeiten. Dies betrifft insbesondere den sitzungsgebundenen temporären öffentlichen Schlüssel des Terminals 118, welcher üblicherweise im Rahmen der Terminal-Authentisierung in komprimierter Form an das Mobilfunkgerät (Schritt 412) und den Authentisierungsserver (Schritt 415) gesandt wird.

Der Zugangsmanagementserver 130 ist in der Lage, mit dem Terminal 118 über die Schnittstelle 134 und das Netzwerk 142 zu kommunizieren. Eine Kommunikation zwischen Terminal 118 und Zugangsmanagementserver 130 erfolgt unter Verwendung einer Verschlüsselung, sodass das Terminal 118 eine Zugriffsanfrage bezüglich eines Zugriffs auf die Sicherungseinrichtung 144 an den Zugangsmanagementserver 130 richtet, wobei die Zugriffsanfrage das aus dem Mobilfunkgerät ausgelesene Attribut 112 in verschlüsselter Weise umfasst. Beispielsweise kann auch eine Ende-zu-Ende-Verschlüsselung zum Einsatz kommen.

Um insgesamt die Zugriffsgeschwindigkeit des Terminals 118 auf das Attribut 112 weiter zu erhöhen, können verschiedene Optimierungen durchgeführt werden. So kann beispielsweise seitens des Terminals darauf verzichtet werden, dem Mobilfunkgerät 100 eine Referenz der Zertifizierungsstelle des übersandten permanenten Zertifikats mitzuteilen. Vielmehr kann festgelegt werden, dass grundsätzlich eine einzige Zertifizierungsstelle zum Einsatz kommt. Damit wird auch das Datenübertragungsvolumen reduziert und in der Folge die Datenübertragungsgeschwindigkeit erhöht.

Eine weitere Möglichkeit besteht darin, den Schritt 414 mit Erzeugen und Senden des Geheimnisses durch das Mobilfunkgerät 100 automatisch auf den Empfang des sitzungsgebundenen temporären öffentlichen Schlüssels in Schritt 412 hin durchzuführen. Schritt 414 erfolgt in diesem Falle unmittelbar auf Schritt 412, ohne dass dies durch ein Kommando seitens des Terminals 118, wie etwa ein "Get Challenge", explizit angefragt wird.

Zudem kann nach Ausführungsformen im Rahmen der Mobilfunkgerät-Authentisierung auf eine konkrete Anforderung des öffentlichen Schlüssels des Mobilfunkgeräts 100 durch das Terminal 118 je nach Referenz des Schlüssels verzichtet werden. Beispielsweise sendet das Mobilfunkgerät 100 den öffentlichen Schlüssel und den zum öffentlichen Schlüssel zugehörigen Domainparameter in Schritt 423 automatisch an das Terminal 118, nach Schritt 420 und/oder allgemein nachdem die Terminal-Authentifizierung erfolgreich abgeschlossen wurde.

Verfügt das Mobilfunkgerät 100 über mehrere verschiedene öffentliche Schlüssel, so wird einer dieser Schlüssel im Voraus als Standardschlüssel definiert und bei Ausbleiben einer expliziten Anforderung des Schlüssels seitens des Terminals 118 wird der besagte Standardschlüssel verwendet zur Mobilfunkgerät-Authentisierung verwendet und in Schritt 423 an das Terminal 118 gesendet. Der Schritt 423 kann beispielsweise als Reaktion auf den Erhalt eines "General Authenticate" Kommandos des Terminals 118 erfolgen.

Weitere Optimierungen können darin liegen, dass aus Sicherheitsgründen elliptische Kurven verwendet werden mit einem q, welcher mindestens eine Bitlänge von 424 Bits aufweist, um das Terminal-Zertifikat zu signieren und während das Mobilfunkgerät-Authentifizierung den symmetrischen Sitzungsschlüssel zu erzeugen. Ferner kann die Anforderung an den symmetrischen Sitzungsschlüssel dahingehend gewählt werden, dass ein AES-128-Schlüssel zum Einsatz kommt.

Die obig beschriebenen Hash-Verfahren können beispielsweise unter Verwendung eines SHA-256-Hash-Algorithmus durchgeführt werden, zumal SHA-256 im Vergleich zu SHA-224 denselben Rechenaufwand zur Hash-Berechnung bei höherer Sicherheit aufweist.

Eine weitere Beschleunigung kann dadurch erzielt werden, dass eine "Ein-Schritt-Hierarchie" bezüglich des Wurzelzertifikats zum Einsatz kommt. Dabei wird Zwischenzertifikate verzichtet werden und das Mobilfunkgerät 100 lediglich ein einzelnes Wurzelzertifikat aufweisen muss, um damit vollständig die Verifizierung des permanenten Zertifikats des Terminals 118 durchzuführen.

Um weiter den Datenaustausch zwischen Terminal und Mobilfunkgerät zu minimieren, kann das permanente Zertifikat des Terminals ohne jegliche Zertifikatserweiterung (Certificate Extensions) versendet werden. Nach Ausführungsformen werden zudem die kleinsten X.509-Zertifikate bezüglich der Wurzelzertifizierungsstelle und der Zertifizierungsstelle, welche die Zertifikate des Mobilfunkgeräts 100 signiert, verwendet.

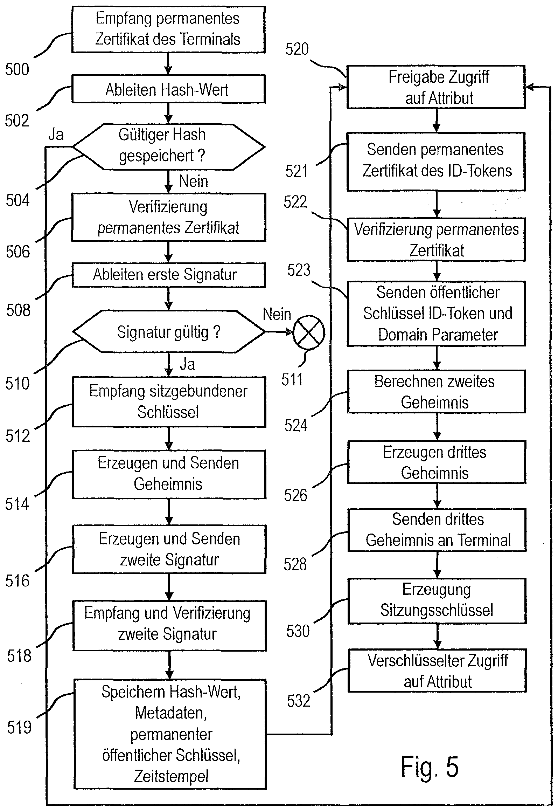

Figur 5 zeigt ein Flussdiagramm eines beispielhaften Verfahrens zur Kontrolle eines Zugriffs auf das Mobilfunkgerät 100 in dem Sicherheitssystem 20 aus Figur 2. Die Schritte 500 bis 514 sind analog zu den Schritten 400 bis 414 aus Figur 4. Im Gegensatz zu dem Verfahren aus Figur 4 wird das erste Geheimnis vom Terminal 118 nicht weitergleitet. Vielmehr ist der dem Terminal 118 zugeordneter statischer privater Schlüssel 160 gespeichert in einem geschützten Speicherbereich des Speichers 128 des Terminals 118 gespeichert. Das Terminal erzeugt auf den Empfang des ersten Geheimnisses hin in Schritt 516 eine Signatur unter Verwendung des statischen privaten Schlüssels 160 sowie eines sitzungsgebundenen temporären öffentlichen Schlüssels des Terminals 118, welcher ebenfalls in dem Speicher 128 gespeichert ist, sowie des entsprechenden ersten Geheimnisses. Die so erzeugte "response" in Form der Signatur übermittelt das Terminal 118 in Schritt 517 an das Mobilfunkgerät 100. Die weiteren Schritte 518 bis 521 sind wiederum analog zu den Schritten 418 bis 421 aus Figur 4.

In Schritt 422 verifiziert das Terminal 118 das empfangene Zertifikat des Mobilfunkgeräts 118 durch Prüfen der zugehörigen Dokumenten-PKI. Zudem kann das Terminal 118 prüfen, ob das Zertifikat des Mobilfunkgeräts gesperrt ist. Hierzu liest das Terminal 118 eine Sperr-ID aus dem Zertifikat des Mobilfunkgeräts aus und sendet eine Sperranfrage an einen Sperrserver 151. Der Sperrserver 150, der Zugriff auf eine beispielsweise in dem Speicher 157 gespeicherte Sperrliste 162 besitz, antwortet mit einer Sperrinformation. Aus der Sperrinformation kann das Terminal 118 ableiten, ob das Zertifikat des Mobilfunkgeräts 100 gesperrt ist. Bei der Sperrliste 162 handelt es sich beispielsweise um eine Negativ- oder Positivliste. Das Zertifikat gilt als gesperrt, wenn die Speerliste 162 als Negativliste die Sperr-ID des Zertifikats umfasst oder wenn die Speerliste 162 als Positivliste die Sperr-ID des Zertifikats nicht umfasst. Nach einer Ausführungsform sendet das Terminal 118 die Speer-ID als Teil der Speeranfrage an den Sperrserver 151 und erhält als Antwort eine Sperrinformation, die anzeigt ob das Zertifikat gesperrt ist. Hierzu gleicht der Sperrserver 151 die vom Terminal 118 empfangene Sperr-ID mit den in der Sperrliste 162 enthaltenen Sperr-IDs ab. Diese Abfrage des Sperrstatus kann beispielsweise auch mittels "Online Certificate Status Protocol" (OCSP) erfolgen, wobei der Serverserver 151 als Validierungsdienst auftritt. Nach einer weiteren Ausführungsform umfasst die Sperrinformation die aktuelle Sperrliste 162, sodass das Terminal 118 selbst die ausgelesene Sperr-ID mit den in der vom Sperrserver 151 empfangenen Sperrliste 162 enthaltenen Sperr-IDs abgleichen kann. Nach einer weiteren Ausführungsform ist die Speerliste auf dem Terminal 118 gespeichert, sodass das Terminal 118 die ausgelesene Sperr-ID mit den in der Sperrliste 162 enthaltenen Sperr-IDs abgleichen kann, ohne eine Anfrage an den Sperrserver 151 zu senden. Nach Ausführungsformen verwaltet der Sperrserver 151 die Sperrliste 162 und sendet aktuelle Versionen der Sperrliste 162 an das Terminal 118. Dies kann beispielsweise selbständig erfolgen, sobald die Sperrliste 162 aktualisiert wurde, in festgelegten Zeitabständen oder auf eine Anfrage des Terminals 118 nach einer aktualisierten Sperrliste 162 hin. Unter der Voraussetzung, dass das permanente Zertifikat des Mobilfunkgeräts 100 nicht gesperrt ist, wird das Verfahren fortgesetzt. Die Schritte 523 bis 532 sind schließlich analog zu den Schritten 423 bis 432 aus Figur 4.

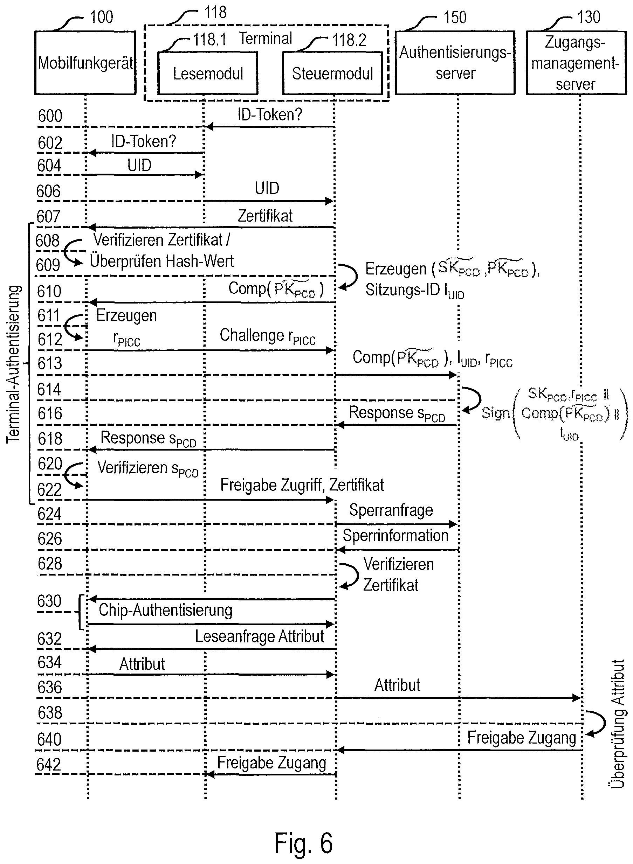

Figur 6 zeigt ein UML-Diagramm des beispielhaften Verfahrens aus Figur 4. Das Terminal 118 umfasst ein Lesemodul 118.1 zur Kommunikation mit dem Mobilfunkgerät 100 sowie ein Steuermodul 118.2 zur Steuerung der Kommunikation. In Schritt 600 sendet das Steuermodul 118.2 eine Anfrage an das Lesemodul 118.1, ob ein Mobilfunkgerät 100 in Reichweite ist. In Schritt 602 sendet das Lesemodul 118.1 eine Anfrage aus, ob ein Mobilfunkgerät 100 in Reichweite ist. Empfängt ein Mobilfunkgerät 100 die Anfrage des Lesemoduls 118.1 antwortet das Mobilfunkgerät 100 in Schritt 604 mit einem UID. Der UID wird in Schritt 606 vom Lesemodul 118.1 an das Steuermodul 118.2 weitergeleitet. In Schritt 607 sendet das Steuermodul 118.2 daraufhin das permanente Zertifikat des Terminals 118 über das Lesemodul 118.1 zu dem Mobilfunkgerät 100. Das Mobilfunkgerät 100 empfängt in Schritt 608 das permanente Zertifikat des Terminals 118, verifiziert das empfangene Zertifikat und überprüft den abgeleiteten Hash-Wert, was den Schritten 300 bis 310 der Figur 3 entspricht. In Schritt 609 erzeugt das Steuermodul 118.2 ein sitzungsgebundenes temporäres

asymmetrisches Schlüsselpaar $\widetilde{SK}_{PCD}, \widetilde{PK}_{PCD}$ sowie eine Sitzungs-ID $I_{UID}$. Der sitzungsgebundene temporäre

öffentliche Schlüssel $\widetilde{PK}_{PCD}$ wird komprimiert und der resultierende komprimierte öffentliche Schlüssel

$Comp\left(\widetilde{PK}_{PCD}\right)$ in Schritt 610 an das Mobilfunkgerät 100 gesendet. In Schritt 611 erzeugt das Mobilfunkgerät 100 ein erstes Geheimnis in Form einer Challenge $r_{PICC}$ und sendet diese in Schritt 612 an das Steuermodul 118.2. Das Steuermodul 118.2 leitet in Schritt 613 die Challenge $r_{PICC}$ zusammen mit dem komprimierten öffentlichen Schlüssel

$$\mathrm{Comp}\!\left(\widetilde{PK_{PCD}}\right)$$ und der Sitzungs-ID $I_{UID}$ an den Authentisierungsserver 150 weiter. Der Authentisierungsserver 150 signiert in Schritt 614 die Challenge $r_{PICC}$ mit dem statischen privaten Schlüssel $SK_{PCD}$ des Terminals 118, der beispielsweise auf dem Authentisierungsserver 150 gespeichert ist. Die resultierende Signatur

$$s_{PCD} = \mathrm{Sign}\!\left(SK_{PCD}, r_{PICC} \,\|\, \mathrm{Comp}\!\left(\widetilde{PK_{PCD}}\right) \,\|\, I_{UID}\right)$$

wird in Schritt 616 als Response $s_{PCD}$ auf die Challenge $r_{PICC}$ an das Steuermodul 118.2 gesendet und von diesem in Schritt 618 an das Mobilfunkgerät 100 weitergeleitet. In Schritt 620 verifiziert das Mobilfunkgerät 100 die Response $s_{PCD}$ und gibt auf ein positives Verifikationsergebnis hin den Zugriff auf das Attribut 112 in Schritt 622 frei. Die Schritte 608 bis 622 entsprechen der Terminal-Authentisierung gemäß Schritt 200 der Figur 3 sowie den Schritten 400 bis 420 der Figur 4.

In Schritt 622 sendet das Mobilfunkgerät 100 zudem ein Zertifikat des Mobilfunkgeräts 100 an das Steuermodul 118.2. Das Steuermodul 118.2 liest eine Sperr-ID aus dem empfangenen Zertifikat aus und sendet in Schritt 624 eine Sperranfrage an den Authentisierungsserver 150, der in Schritt 626 mit einer Sperrinformation antwortet. Das Steuermodul 118.2 verifiziert in Schritt 628 das Zertifikat des Mobilfunkgeräts 100 durch Überprüfung der zugehörigen Dokumenten-PKI und der Sperrinformation. Die Schritte 622 bis 628 entsprechen den Schritten 421 und 422 der Figur 4.

In den Schritt 630 erfolgt eine Chip-Authentisierung, d.h. Mobilfunkgerät-Authentisierung, des Mobilfunkgeräts 100 gegenüber dem Steuermodul 118.2. Der Schritt 630 entspricht der Terminal-Authentisierung gemäß Schritt 202 der Figur 3 sowie den Schritten 423 bis 432 der Figur 4. In den Schritten 632 und 634 erfolgt ein verschlüsselter Lesezugriff des Steuermoduls 118.2 auf das Attribut 112 im Speicher 106 des Mobilfunkgeräts 100. Der verschlüsselte Zugriff erfolgt über das Lesemodul 118.1, wobei eine Ende-zu-Ende-Verschlüsselung zwischen Steuermodul 118.2 und Mobilfunkgeräts 100 verwendet wird. Das ausgelesene Attribut 112 wird in Schritt 636 von dem Steuermodul 118.2 an den Zugangsmanagementserver 130 über das Netzwerk 142 weitergeleitet. Der Zugangsmanagementserver 130 empfängt das Attribut 112 und prüft dessen Gültigkeit in Schritt 638 durch Abgleichen mit den in der Tabelle 138 gespeicherten Attributen. Ist das Attribut 112 als gültiges Attribut in der Tabelle 138 gespeichert, so gibt der Zugangsmanagementserver 130 in Schritt 640 für das Mobilfunkgerät 10 den Zugang zur bzw. über die Sicherungseinrichtung 144 frei. Eine entsprechende Freigabe wird vom Zugangsmanagementserver 130 an das Steuermodul 118.2 und von diesem in Schritt 642 an das Lesemodul 118.1 gesendet. Nach Ausführungsformen ist das Lesemodul 118.1 dazu konfiguriert die Freigabe über das Netzwerk 142 an die Sicherungseinrichtung 144 weiterzuleiten. Hierzu ist beispielsweise die Schnittstelle 122 vom Lesemodul umfasst und zusätzlich zur Kommunikation mit dem Mobilfunkgerät 100 mittels RFID auch dazu konfiguriert über das Netzwerk 142 zu kommunizieren. Nach weiteren Ausführungsformen umfasst das Terminal 118 eine zusätzliche Schnittstelle zur Kommunikation über das Netzwerk 142. Auf den Empfang der Freigabe hin entriegelt die Sicherungseinrichtung 144 beispielsweise eine Verriegelungsanlage einer Zugangskontrolleinrichtung, wie etwa ein elektrisches Schloss einer Tür, oder ermöglicht in sonstiger Weise den Zugang zu einem von der Sicherungseinrichtung 144 gesicherten Bereich.

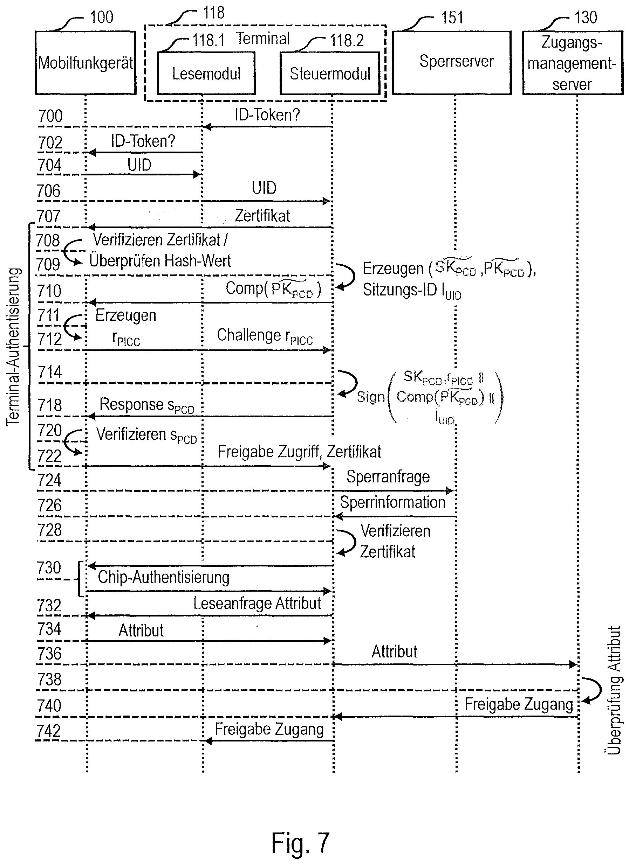

Figur 7 zeigt ein UML-Diagramm des beispielhaften Verfahrens aus Figur 5. Die Schritte 700 bis 712 sind analog zu den Schritten 600 bis 612 aus Figur 6. In Schritt 714 signiert das Terminal 118 die Challenge $r_{PICC}$ mit dem statischen privaten Schlüssel $SK_{PCD}$ des Terminals 118, der beispielsweise in einem geschützten Bereich des Terminalspeichers gespeichert ist. Die resultierende Signatur

$$s_{PCD} = \mathrm{Sign}\!\left(SK_{PCD}, r_{PICC} \,\|\, \mathrm{Comp}\!\left(\widetilde{PK_{PCD}}\right) \,\|\, I_{UID}\right)$$

wird in Schritt 718 als Response $s_{PCD}$ auf die Challenge $r_{PICC}$ von dem Steuermodul 118.2 an das Mobilfunkgerät 100 gesendet. Die Signatur umfasst zudem den komprimierten öffentlichen Schlüssel $\mathrm{Comp}\!\left(\widetilde{PK_{PCD}}\right)$ sowie die Sitzungs-ID $I_{UID}$. In Schritt 720 verifiziert das Mobilfunkgerät 100 die Response $s_{PCD}$ und gibt auf ein positives Verifikationsergebnis hin den Zugriff auf das Attribut 112 in Schritt 722 frei. Die Schritte 708 bis 722 entsprechen der Terminal-Authentisierung gemäß Schritt 200 der Figur 3 sowie den Schritten 500 bis 520 der Figur 5.

In Schritt 722 sendet das Mobilfunkgerät 100 ein Zertifikat des Mobilfunkgeräts 100 an das Steuermodul 118.2. Das Steuermodul 118.2 liest eine Sperr-ID aus dem empfangenen Zertifikat aus und sendet in Schritt 624 eine Sperranfrage an einen Sperrserver 151, der in Schritt 726 mit einer Sperrinformation antwortet. Das Steuermodul 118.2 verifiziert in Schritt 728 das Zertifikat des Mobilfunkgeräts 100 durch Überprüfung der zugehörigen Dokumenten-PKI und der Sperrinformation. Nach alternativen Ausführungsformen kann eine entsprechende Sperrliste auch auf dem Terminal 118 hinterlegt sein. In diesem Fall ist das Terminal ohne Sperranfrage in der Lage die Gültigkeit des Zertifikats zu überprüfen. Der Sperrserver 151 verwaltet beispielsweise die Sperrliste und sendet eine aktuelle Version der Sperrliste selbstständig oder auf Anfrage an das Terminal 118. Die Schritte 722 bis 728 entsprechen den Schritten 521 und 522 der Figur 5.

Die weiteren Schritte 730 bis 742 sind analog zu den Schritten 630 bis 642 aus Figur 6. Hierbei entspricht der Schritt 730 der Terminal-Authentisierung gemäß Schritt 202 der Figur 3 sowie den Schritten 523 bis 532 der Figur 5.

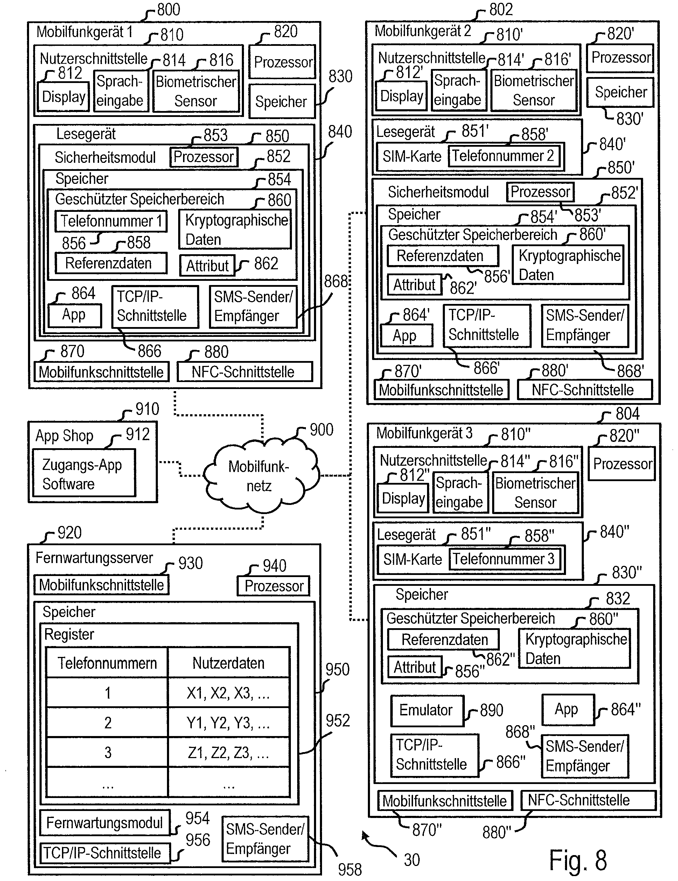

Figur 8 zeigt ein schematisches Blockdiagramm eines beispielhaften Mobilfunksystems. In Figur 8 sind drei beispielhafte Mobilfunkgeräte 800, 802, 804 des Mobilfunksystems zu sehen.

Das Mobilfunkgerät 800 eines ersten Nutzers hat eine Nutzerschnittstelle 810, das heißt ein sogenanntes User-Interface, welches beispielsweise ein Display 812, insbesondere ein berührungsempfindliches Display, das heißt ein sogenanntes Touchpanel, aufweist sowie beispielsweise ein Spracheingabemodul 814 zur Eingabe von natürlichsprachlichen Kommandos und einen biometrischen Sensor 816. Beispielsweise kann der biometrische Sensor 816 für eine biometrische Authentifizierung des Nutzers gegenüber dem Mobilfunkgerät 800 dienen als Alternative oder zusätzlich zu einer Authentifizierung mittels einer PIN.

Das Mobilfunkgerät 800 hat ferner ein Lesegerät 840, welches einen integralen Bestandteil des Mobilfunkgeräts 800 bilden kann. Das Lesegerät 840 dient zur Kommunikation mit einem Sicherheitsmodul 850, bei dem es sich beispielsweise um eine SIM-Karte oder ein elektronisches Ausweisdokument, wie zum Beispiel einen elektronischen Personalausweis, handelt, zu letzterem vergleiche WO 2010/145979 A1. Auf dem Sicherheitsmodul 850 ist ein Chipkartenbetriebssystem installiert. Bei dem Lesegerät 840 handelt es sich insbesondere um ein Chipkartenlesegerät.

Beispielsweise handelt es sich bei dem Sicherheitsmodul 850, welches einen Speicher 852 mit einem geschützten Speicher 854 umfasst, um eine SIM-Karte. Das Sicherheitsmodul 850 umfasst zudem einen Prozessor 853. Auf den geschützten Speicherbereich kann dann beispielsweise nur der Prozessor 853 des Sicherheitsmoduls 850 zugreifen. In dem geschützten Speicherbereich 854 sind beispielsweise eine Telefonnummer 856, in diesem Fall die dem Sicherheitsmodul 850 zugeordnete Telefonnummer 1 des Teilnehmers 1, gespeichert, sowie Referenzdaten 858, kryptographische Daten 860 und zumindest ein dem ersten Nutzer zugeordnetes Attribut 862.

Die Referenzdaten 858 dienen dabei zur Authentifizierung des ersten Nutzers gegenüber dem Mobilfunkgerät 800 mit dem in dem Lesegerät 840 befindlichen Sicherheitsmodul 850. Beispielsweise gibt der erste Nutzer zu seiner Authentifizierung gegenüber dem Mobilfunkgerät 800 seine PIN über das Display 812 ein. Die eingegebene PIN wird dann auf Übereinstimmung mit den in dem geschützten Speicherbereich 854 gespeicherten Referenzdaten 858 durch den Prozessor 853 des Sicherheitsmoduls geprüft. Der Prozessor 853 gibt im Falle einer Übereinstimmung ein Freigabesignal ab, sodass anschließend die Funktionen des Mobilfunkgeräts 800 von dem ersten Nutzer genutzt werden können.

Bei den kryptographische Daten 860 handelt es sich beispielsweise um einzelne oder alle kryptographische Daten, wie kryptographische Schlüssel, Zertifikate, Geheimnisse und/oder Signaturen, welche das Mobilfunkgerät 800 beim Ausführen eines der verfahren nach einer der Figuren 3 bis 7 gespeichert hat, erzeugt und/oder empfängt. Insbesondere umfassen die kryptographische Daten 860 einen geheimen Schlüssel eines kryptographischen Schlüsselpaars des Mobilfunkgeräts 800.

Das Mobilfunkgerät 800 hat einen Prozessor 820 und eine Speicher 830. Der Prozessor 820 dient zur Ausführung verschiedener Anwendungsprogramme, die auf dem Mobilfunkgerät 800 installiert sein können. Hierzu kann beispielsweise ein Anwendungsprogramm gehören, welches zur Speicherung von Kontakten dient sowie zur Auswahl eines Kontakts, beispielsweise um einen Anruf zu dem entsprechenden Teilnehmer zu tätigen oder eine SMS zu senden.

In der hier betrachteten Ausführungsform ist beispielsweise eine Zugangs-App 864 auf dem Mobilfunkgerät 800 installiert, das heißt eine App welche das Verfahren nach einer der Figuren 3 bis 7 ausführt. Bei der Zugangs-App 864 handelt es sich um eine Chipkartenapplikation. Ferner umfasst die Zugangs-App 864 oder hat Zugriff auf eine Schnittstelle 868 zumindest zum Senden und Empfangen von SMS-Nachrichten und ein Schnittstelle 866 zum Senden und Empfangen von Nachrichten über das Internet nach dem TCP/IP-Protokoll. Das Mobilfunkgerät 800 hat ferner eine Mobilfunkschnittstelle 870, das heißt ein sogenanntes Air-Interface, zur Verbindung des Mobilfunkgeräts 800 mit einem digitalen zellulären Mobilfunknetzwerk 900, über welches das Mobilfunkgerät 800 auch über das Internet kommunizieren kann. Zudem umfasst das Mobilfunkgerät eine Schnittstelle 880 zur Nahfeldkommunikation, mit einem Terminal (nicht gezeigt). Dabei kann beispielsweise die Kommunikation zwischen dem Terminal und dem Mobilfunkgerät entsprechend der Norm ISO 14443 drahtlos mit einer Frequenz von 13,56 MHz erfolgen.

Die Zugangs-App 864 steht als Zugangs-App Software 912 in einem App-Shop 910 zum Download über das Internet, beispielsweise mittels des Mobilfunknetzes 900, zur Verfügung. Der App-Shop 912 und die darin befindliche Zugangs-App 912 können durch eine URL spezifiziert sein, sodass zur Installation der Zugangs-App 912 zum Beispiel auf dem Mobilfunkgerät 800 lediglich diese URL der Zugangs-App 912 selektiert werden muss, um eine Instanz 864 der Zugangs-App dort zu installieren. Der Fernwartungsserver 920 hat eine Mobilfunkschnittstelle 930 zur Verbindung des Fernwartungsservers 920 mit dem Internet Mobilfunknetz 900. Der Fernwartungsservers 920 einen Speicher 950 mit einer Registrierungsdatenbank 952, in der beispielsweise die Teilnehmer 1 bis 3, denen die Mobilfunkgeräte 800 bis 804 zugeordnet sind, indem die Telefonnummern 1 bis 3 dieser Teilnehmer 1 bis 3 dort eingetragen sind. Den Telefonnummern sind jeweils Nutzerdaten zugeordnet, welche den aktuellen Zustand bzw. die aktuelle Konfiguration der Zugangsparameter und/oder der Zugangs-App des jeweiligen Mobilfunkgeräts charakterisieren. Insbesondere kann beispielsweise das Provisionieren von kryptographischen Schlüsseln über die Telefonnummern der Mobilfunkgeräte erfolgen. Ferner umfasst der Fernwartungsserver eine Schnittstelle 958 zumindest zum Senden und Empfangen von SMS-Nachrichten und ein Schnittstelle 956 zum Senden und Empfangen von Nachrichten über das Internet nach dem TCP/IP-Protokoll.

Der Fernwartungsserver 920 umfasst zudem einen Prozessor 940 zur Ausführung eines Fernwartungsmoduls 954 zur Fernwartung der Konfiguration der Zugangsparameter und/oder der Zugangs-App der Mobilfunkgeräte 800 bis 804. Beispielsweise ist der Fernwartungsserver 920 und insbesondere Fernwartungsmodul 954 dazu konfiguriert, Bugs in der Zugangs-App 864 zu korrigieren und/oder Sicherheitslücken zu schließen. Dies kann beispielsweise per Push-Verfahren erfolgen. Beispielsweise versendet der Fernwartungsserver 920 eine binary SMS an ein oder mehrere Mobilfunkgeräte, wie etwa das Mobilfunkgerät 800, welche von dem entsprechenden Mobilfunkgerät empfangen und ausgeführt wird. Beispielsweise ist das Fernwartungsmodul 954 dazu konfiguriert, über das Mobilfunknetz 900 auf die Mobilfunkgeräte zuzugreifen und beispielsweise Berechtigungen vorübergehend oder auf Dauer zu sperren. Befindet sich der erste Nutzer im Urlaub, so kann beispielsweise seine Zugangsberechtigung zu seiner Arbeitsstätte für den Zeitraum des Urlaubs vorübergehend gesperrt werden. Ebenso kann seine Zugangsberechtigung beispielsweise auf bestimmte oder unbestimmte Zeit geändert werden, wenn der betreffende Nutzer seine Arbeitsstätte innerhalb seiner Firma auf bestimmte oder unbestimmte Zeit wechselt.

Nach Ausführungsformen kann das Fernwartungsmodul 954 dazu konfiguriert sein, persönliche Daten, insbesondere Attribute des Nutzers eines Mobilfunkgeräts, zu aktualisieren. Beispielsweise können Sicherheitsfreigaben, Zugangsberechtigungen, die Zugehörigkeit zu einer bestimmten Abteilung und/oder Arbeitsgruppe, der Arbeitsplatz, eine dem Arbeitsplatz zugeordnete und/oder eine persönliche Adresse, ein Foto des dem Mobilfunkgerät zugeordneten Nutzers, dem Mobilfunkgerät zugeordnete kryptographische Schlüssel und/oder anderen Instanzen zugeordnete öffentliche kryptographische Schlüssel und/oder Zertifikate aktualisiert werden.

Steht beispielsweise ein Zertifikat eines der Mobilfunkgeräte 800 bis 804 kurz vor dem Ablauf, so kann das Fernwartungsmodul 954 beispielsweise veranlassen, dass auf dem Mobilfunkgerät ein neues asymmetrisches kryptographisches Schlüsselpaar erzeugt wird und für den öffentlichen Schlüssel des neu generierten Schlüsselpaars ein aktualisiertes Zertifikat mit neuem Ablaufdatum ausstellen. Nach Ausführungsformen kann das Fernwartungsmodul 954 beispielsweise dazu konfiguriert sein, die Schlüssellänge einzelner oder aller verwendeten kryptographischen Schlüssel und/oder Algorithmen zur Generierung von kryptographischen Schlüsseln und/oder Verschlüsselungsalgorithmen zu aktualisieren.

Ferner kann das Fernwartungsmodul 954 beispielsweise dazu konfiguriert sein, einzelne Applikationen, wie die Zugangs-App, und/oder das Betriebssystem des Mobilfunkgeräts bzw. ein auf einem Sicherheitsmodul laufendes oder emuliertes Chipkartenbetriebssystem zu aktualisieren. Entsprechende Updates können beispielsweise von dem Fernwartungsserver 920 selbst oder von dem App Shop 910 zur Verfügung gestellt werden. In letzterem Fall wird der Updatevorgang von dem Fernwartungsmodul 954 lediglich angestoßen. Hierbei kann das Fernwartungsmodul 954 beispielsweise dazu konfiguriert sein, einen Rollback-Mechanismus zu implementieren. Der Rollback-Mechanismus umfasst beispielsweise ein Flag, welches erst gesetzt oder entfernt wird, wenn die aktualisierte Version vollständig bzw. erfolgreich auf dem Mobilfunkgerät installiert wurde. Die Vorgängerversion der wird erst deinstalliert, wenn das entsprechende Flag des Rollback-Mechanismus gesetzt bzw. entfernt und somit die erfolgreiche Installation des Updates bestätigt wurde. Solange dies nicht der Fall ist, bleibt die Vorgängerversion voll funktionsfähig. Im Falle eines fehlerhaften Updates, beispielsweise aufgrund einer Unterbrechung der Mobilfunkverbindung kann jederzeit auf die Vorgängerversion zurückgegangen werden.

Die Kommunikation zwischen Fernwartungsserver 920 und den Mobilfunkgeräten, wie etwa dem Mobilfunkgerät 800, über das Mobilfunknetz 900 erfolgt mittels SSL oder SSH. Nach Ausführungsformen erfolgt die Kommunikation beispielsweise mittels einer Ende-zu Ende-Verschlüsselung. Nach Ausführungsformen ist werden die übertragenen Daten im Falle einer Übertragung mittels Push-Nachricht ebenfalls verschlüsselt, beispielsweise mit einem öffentlichen Schlüssel des Mobilfunkgeräts 800.

Die Mobilfunkgeräte 802 und 804 umfassen eine Vielzahl von Elementen, die Elementen des Mobilfunkgeräts 800 entsprechen. Diese Elemente werden im Weiteren mit denselben Bezugszeichen, die um einen bzw. zwei Apostrophen ergänzt sind, gekennzeichnet.

Das Sicherheitsmodul 852' des Mobilfunkgeräts 802 eines zweiten Nutzers entspricht dem Sicherheitsmodul 852 des Mobilfunkgeräts 800, ist jedoch nicht zerstörungsfrei entnehmbar in dem Lesegerät 840' angeordnet, sondern vielmehr fest in dem Mobilfunkgerat 802 fixiert und gegen eine Entnahme geschützt. Beispielsweise weist das Sicherheitsmodul 852' Sensoren zur Überwachung des Zustands des Sicherheitsmoduls 852' sowie von dessen Umgebung, um Abweichungen vom Normalbetrieb zu erkennen, welche auf Manipulationsversuche und insbesondere Ausbauversuche hinweisen können. Entsprechende Sensortypen umfassen beispielsweise einen Taktfrequenzsensor, einen Temperatursensor, einen Spannungssensor, und/oder einen Lichtsensor. Taktfrequenzsensoren, Temperatursensoren und Spannungssensoren erfassen beispielsweise Abweichungen der Taktfrequenz, Temperatur und/oder Spannung nach oben oder unten von einem vordefinierten Normalbereich. Das Sicherheitsmodul 852' ist beispielsweise so konfiguriert, dass es sich im Falle eines festgestellten Ausbauversuchs selbständig unbrauchbar macht, beispielsweise durch Löschen oder zusätzliches Verschlüsseln der auf dem Sicherheitsmodul 852' gespeicherten Daten.

In der gezeigten Ausführungsform ist in dem Lesegerät 840' eine übliche SIM-Karte 851' mit einer der SIM-Karte 851' zugeordneten Telefonnummer 858' des zweiten Nutzers angeordnet. In diesem Fall ist die SIM-Karte 851' zusätzlich zu dem Sicherheitsmodul 850' vorgesehen.

Mobilfunkgerät 804 eines dritten Nutzers umfasst schließlich kein Sicherheitsmodul, auf welchem ein Chipkartenbetriebssystem installiert ist. Vielmehr umfasst der Speicher 830 einen geschützten Speicherbereich 832, auf weichen nur über dem Prozessor 820" des Mobilfunkgeräts 804 zugegriffen werden kann. Dieser geschützte Speicherbereich 832 umfasst beispielsweise analog zu dem geschützten Speicherbereich 854 des Sicherheitsmoduls 850 des Mobilfunkgeräts 800 Referenzdaten 862", kryptographische Daten 860" und ein oder mehrere Attribute 856".

Das Mobilfunkgerät 804 umfasst zudem eine Zugangs-App 864", eine TCP/IP-Schnittstelle 866" und eine SMS-Sender/Empfänger 868". Zudem umfasst das Mobilfunkgerät 804 einen Emulator 890 zur Emulierung eines Chipkartenbetriebssystems, auf welchem die Chipkartenapplikation 864" läuft.

Nach Ausführungsformen können die Mobilfunkgeräte 800, 802 und 804 auch so konfiguriert sein, dass sie keine SIM-Karten, Telefonnummern und SMS-Sender/Empfänger umfassen, sondern beispielsweise ausschließlich über WLAN mit dem Fernwartungsserver 920 kommunizieren. Der Fernwartungsserver 920 identifiziert die Mobilfunkgeräte 800, 802 und 804 dann beispielsweise anhand eines anderen Identifikators als der einer Telefonnummer. In diesem Fall umfasst das Register 952 anstelle der Telefonnummern die entsprechenden Identifikatoren.

Nach Ausführungsformen kann es sich bei der Zugangs-App 864" beispielsweise auch um eine Applikation handeln, welche dazu konfiguriert ist auf einem Betriebssystem des Mobilfunkgeräts 804, wie etwa Android, Apple iOS oder Windows, ausgeführt zu werden. In diesem Fall kann ein Emulator zur Emulierung eines Chipkartenbetriebssystems entfallen, vielmehr wird die Zugangs-App 864" in diesem Fall direkt auf dem entsprechenden Betriebssystem des Mobilfunkgeräts 804 ausgeführt.

Bezugszeichenliste

|     |                                                       |
| --- | ----------------------------------------------------- |
| 10  | Sicherheitssystem                                     |
| 20  | Sicherheitssystem                                     |
| 30  | Mobilfunksystem                                       |
| 100 | Mobilfunkgerät                                         |
| 102 | erster Prozessor                                      |
| 104 | erste Schnittstelle                                   |
| 105 | Mobilfunkschnittstelle                                |
| 106 | erster Speicher                                       |
| 108 | Chipkartenapplikation                                 |
| 110 | temporäres Schlüsselpaar                              |
| 112 | Attribut                                              |
| 114 | Hash-Wert und Metadaten                               |
| 116 | öffentlicher Schlüssel der Wurzelzertifizierungsstelle |
| 117 | Zertifikat des Mobilfunkgeräts                        |
| 118 | Terminal                                              |
| 118.1 | Lesemodul                                           |
| 118.2 | Steuermodul                                          |
| 120 | zweiter Prozessor                                     |
| 122 | zweite Schnittstelle                                  |
| 124 | zweite Instruktionen                                  |
| 126 | Schlüsselpaar                                         |
| 127 | Zertifikat des Terminals                             |
| 128 | zweiter Speicher                                      |
| 130 | Zugangskontrolleinrichtung                            |
| 132 | vierter Prozessor                                     |

| | |
|---|---|
| 134 | vierte Schnittstelle |
| 136 | vierte Instruktionen |
| 138 | Tabelle |
| 140 | vierter Speicher |
| 142 | Netzwerk |
| 144 | Sicherungseinrichtung |
| 150 | Authentisierungsserver |
| 151 | Sperrserver |
| 152 | dritter Prozessor |
| 153 | dritter Prozessor |
| 154 | dritte Schnittstelle |
| 155 | dritte Schnittstelle |
| 156 | dritter Speicher |
| 157 | dritter Speicher |
| 158 | dritte Instruktionen |
| 159 | dritte Instruktionen |
| 160 | privater Schlüssel des Terminals |
| 162 | Sperrliste |
| 800 | Mobilfunkgerät |
| 802 | Mobilfunkgerät |
| 804 | Mobilfunkgerät |
| 810 | Nutzerschnittstelle |
| 812 | Display |
| 814 | Spracheingabe |
| 816 | Biometrischer Sensor |
| 820 | Prozessor |
| 830 | Speicher |
| 832 | Geschützter Speicher |
| 840 | Lesegerät |
| 850 | Sicherheitsmodul |
| 851 | SIM-Karte |
| 852 | Speicher |
| 853 | Prozessor |
| 854 | Geschützter Speicher |
| 856 | Telefonnummer |
| 858 | Referenzdaten |
| 860 | Kryptographische Daten |
| 862 | Attribut |
| 864 | Zugangs- Chipkartenapplikation |
| 866 | TCP/IP-Schnittstelle |
| 868 | SMS-Sender/Empfänger |
| 870 | Mobilfunkschnittstelle |
| 880 | NFC-Schnittstelle |
| 890 | Emulator |
| 900 | Mobilfunknetz |
| 910 | App Shop |
| 912 | Zugangs- Chipkartenapplikation |
| 920 | Fernwartungsserver |
| 930 | Mobilfunkschnittstelle |
| 940 | Prozessor |
| 950 | Speicher |
| 952 | Register |
| 954 | Fernwartungsmodul |
| 956 | TCP/IP-Schnittstelle |
| 958 | SMS-Sender/Empfänger |

**Patentansprüche**

1. Verfahren zur Kontrolle eines Zugriffs eines Terminals (118) auf ein in einem Mobilfunkgerät (100, 800, 802) gespeichertes Attribut (112), wobei das Mobilfunkgerät (100, 800, 802) eine erste Mobilfunkschnittstelle (105), eine erste Kommunikationsschnittstelle (104) und eine Applikation (108) umfasst, die dazu konfiguriert ist, das Mobilfunkgerät (100, 800, 802) zum Ausführen des Verfahrens zu steuern, wobei das Verfahren eine Authentisierung des Terminals (118) durch das Mobilfunkgerät (100, 800, 802) und eine Authentisierung des Mobilfunkgeräts (100, 800, 802) durch das Terminal (118) umfasst,

   wobei das Mobilfunkgerät (100, 800, 802) ein Chipkartenbetriebssystem umfasst und wobei es sich bei der Applikation (108) um eine Chipkartenapplikation handelt, die auf dem Chipkartenbetriebssystem ausführbar ist, wobei das Chipkartenbetriebssystem auf einem Sicherheitsmodul (850) des Mobilfunkgeräts (100, 800, 802) installiert ist und die Chipkartenapplikation (108) auf dem Chipkartenbetriebssystem des Sicherheitsmoduls (850) ausgeführt wird,
   wobei die Authentisierung des Terminals (118) durch das Mobilfunkgerät (100, 800, 802) umfasst:

   - Senden eines ersten Zugriffstokens von dem Terminal (118) an das Mobilfunkgerät (100, 800, 802),
   - Verifizierung einer ersten Signatur des ersten Zugriffstokens mit einem dem Terminal (118) zugeordneten statischen öffentlichen Schlüssel durch das Mobilfunkgerät (100, 800, 802),
   - Erzeugen und Senden eines sitzungsgebundenen temporären öffentlichen Schlüssels durch das Terminal (118) an das Mobilfunkgerät (100, 800, 802),
   - Erzeugen und Senden eines zufälligen ersten Geheimnisses durch das Mobilfunkgerät (100, 800, 802) an das Terminal (118),
   - Erstellen einer zweiten Signatur des zufälligen ersten Geheimnisses mit einem dem Terminal (118) zugeordneten statischen privaten Schlüssel (160) und dem sitzungsgebundenen temporären öffentlichen Schlüssel des Terminals (118),
   - Senden der zweiten Signatur durch das Terminal (118) an das Mobilfunkgerät (100, 800, 802),
   - Verifizierung der zweiten Signatur des zufälligen ersten Geheimnisses durch das Mobilfunkgerät (100, 800, 802) unter Verwendung des zufälligen ersten Geheimnisses, des sitzungsgebundenen temporären öffentlichen Schlüssels des Terminals (118) und des dem Terminal (118) zugeordneten statischen öffentlichen Schlüssels,
   - nach erfolgreicher Verifizierung der ersten und zweiten Signatur, Freigabe des Zugriffs des Terminals (118) auf das Attribut (112),

   wobei der Zugriff des Terminals (118) auf das Attribut (112) nur unter der Voraussetzung der erfolgreichen Authentisierung des Mobilfunkgeräts (100, 800, 802) durch das Terminal (118) erfolgt,
   wobei die Authentisierung des Mobilfunkgeräts (100, 804) umfasst:

   - Senden eines öffentlichen Schlüssels des Mobilfunkgeräts (100, 804) und eines zu dem öffentlichen Schlüssel zugehörigen Domain-Parameter an das Terminal (118),
   - Berechnen eines dem Mobilfunkgerät (100, 804) und dem Terminal (118) gemeinsamen zweiten Geheimnisses aus einem privaten Schlüssel des Mobilfunkgeräts (100, 804), dem sitzungsgebundenen temporären öffentlichen Schlüssel des Terminals (118) und dem Domain-Parameter durch das Mobilfunkgerät (100, 804),
   - Berechnen des gemeinsamen zweiten Geheimnisses aus dem öffentlichen Schlüssel des Mobilfunkgeräts (100, 804), dem sitzungsgebundenen temporären privaten Schlüssel des Terminals (118) und dem Domain-Parameter durch das Terminal (118),
   - Erzeugen eines zufälligen dritten Geheimnisses durch das Mobilfunkgerät (100, 804),
   - Senden des zufälligen dritten Geheimnisses an das Terminal (118) und
   - Erzeugen eines symmetrischen Sitzungsschlüssels aus dem dritten Geheimnis und dem gemeinsamen zweiten Geheimnis durch das Mobilfunkgerät (100, 804) und das Terminal (118),

   wobei die nachfolgende Kommunikation mit dem Zugriff auf das Attribut (112) verschlüsselt mit dem symmetrischen Sitzungsschlüssel erfolgt,
   wobei das Mobilfunkgerät (100, 804) mittels seiner Mobilfunkschnittstelle (105) über ein digitales zellulares Mobilfunknetzwerk (900) mit einem Fernwartungsserver (920) kommuniziert, welcher die dem Mobilfunkgerät (100, 804) zugeordneten kryptographischen Schlüssel , umfassend den privaten Schlüssel des Mobilfunkgeräts, über eine dem Fernwartungsserver (920) bekannte Mobilfunknummer des Mobilfunkgeräts (100, 804) provisioniert.

2. Verfahren nach Anspruch 1, wobei das Erstellen der zweiten Signatur des zufälligen ersten Geheimnisses durch das Terminal (118) erfolgt oder

wobei die Authentisierung des Terminals (118) durch das Mobilfunkgerät (100, 800, 802) über einen Authentisierungsserver (150) erfolgt, welcher den dem Terminal (118) zugeordneten statischen privaten Schlüssel (160) umfasst,

wobei das Terminal (118) das zufällige erste Geheimnis an den Authentisierungsserver (150) weiterleitet und den sitzungsgebundenen temporären öffentlichen Schlüssel des Terminals (118) an den Authentisierungsserver (150) sendet,

wobei das Erstellen der zweiten Signatur des zufälligen ersten Geheimnisses durch den Authentisierungsserver (150) erfolgt,

wobei der Authentisierungsserver (150) die zweite Signatur an das Terminal (118) sendet.

3. Verfahren nach einem der vorhergehenden Ansprüche, wobei das erste Zugriffstoken auf eine erfolgreiche Verifizierung der ersten und zweiten Signatur hin als gültiges Zugriffstoken in dem Mobilfunkgerät (100, 800, 802) gespeichert wird.

4. Verfahren nach einem der vorhergehenden Ansprüche, wobei die Authentisierung durch das Mobilfunkgerät (100, 800, 802) auf den Empfang des ersten Zugriffstoken hin ein automatisches Überprüfen umfasst, ob in dem Mobilfunkgerät (100, 800, 802) ein mit dem empfangenen ersten Zugriffstoken übereinstimmendes gültiges zweites Zugriffstoken gespeichert ist, wobei, im Falle dass ein gültiges zweites Zugriffstoken in dem Mobilfunkgerät (100, 800, 802) gespeichert ist, eine Freigabe eines Zugriffs des Terminals (118) auf das in dem Mobilfunkgerät (100, 800, 802) gespeicherte Attribut (112) erfolgt, wobei, im Falle dass kein gültiges zweites Zugriffstoken in dem Mobilfunkgerät (100, 800, 802) gespeichert ist, die Authentisierung des Terminals (118) durch das Mobilfunkgerät (100, 800, 802) erfolgt.

5. Verfahren nach einem der vorhergehenden Ansprüche, wobei das Zugriffstoken eine Zugriffsberechtigung umfasst und wobei das Verfahren ferner umfasst:

- im Falle dass kein gültiges zweites Zugriffstoken in dem Mobilfunkgerät (100, 800, 802) gespeichert ist, nach dem erfolgreichen Verifizieren der ersten und zweiten Signatur Verknüpfen und Speichern der Zugriffsberechtigung mit dem ersten Zugriffstoken in dem Mobilfunkgerät (100, 800, 802), wobei eine Freigabe des Zugriffs des Terminals (118) auf das Attribut (112) entsprechend der Zugriffsberechtigung erfolgt,
- im Falle dass ein gültiges zweites Zugriffstoken in dem Mobilfunkgerät (100, 800, 802) gespeichert ist, Lesen der mit dem zweiten Zugriffstoken verknüpft gespeicherten Zugriffsberechtigung, wobei eine Freigabe des Zugriffs des Terminals (118) auf das Attribut (112) entsprechend der Zugriffsberechtigung erfolgt, und/oder

wobei das Verfahren ferner umfasst:

- im Falle dass kein gültiges zweites Zugriffstoken in dem Mobilfunkgerät (100, 800, 802) gespeichert ist, nach dem erfolgreichen Verifizieren der ersten und zweiten Signatur Verknüpfen und Speichern des statischen öffentlichen Schlüssels des Terminals (118) mit dem ersten Zugriffstoken in dem Mobilfunkgerät (100, 800, 802), wobei eine weitere Kommunikation mit dem Terminal (118) verschlüsselt unter Verwendung des statischen öffentlichen Schlüssels des Terminals (118) erfolgt,
- im Falle dass ein gültiges zweites Zugriffstoken in dem Mobilfunkgerät (100, 800, 802) gespeichert ist, Lesen des mit dem Zugriffstoken verknüpft gespeicherten statischen öffentlichen Schlüssels des Terminals (118), wobei eine weitere Kommunikation mit dem Terminal (118) verschlüsselt unter Verwendung des statischen öffentlichen Schlüssels des Terminals (118) erfolgt, und/oder

wobei das Verfahren ferner umfasst:

- im Falle dass kein gültiges zweites Zugriffstoken in dem Mobilfunkgerät (100, 800, 802) gespeichert ist, nach dem erfolgreichen Verifizieren der ersten und zweiten Signatur Erzeugen und Verknüpfen eines Zeitstempels mit dem Zugriffstoken in dem Mobilfunkgerät (100, 800, 802), wobei der Zeitstempel eine maximale Gültigkeitsdauer des Zugriffstokens angibt,
- im Falle dass ein zweites Zugriffstoken in dem Mobilfunkgerät (100, 800, 802) gespeichert ist, Lesen des mit dem zweiten Zugriffstoken verknüpft gespeicherten Zeitstempels, wobei das zweite Zugriffstoken nur dann gültig ist, wenn der Zeitstempel gültig ist, und/oder

wobei das Verfahren ferner umfasst,

- im Falle dass kein gültiges zweites Zugriffstoken in dem Mobilfunkgerät (100, 800, 802) gespeichert ist, nach dem erfolgreichen Verifizieren der ersten und zweiten Signatur Erzeugen und Verknüpfen eines Nutzungszählers mit dem Zugriffstoken in dem Mobilfunkgerät (100, 800, 802), wobei der Nutzungszähler dazu konfiguriert ist die Anzahl der Nutzungen des Zugriffstokens zur Freigabe des Zugriffs des Terminals (118) auf das Attribut (112) zu zählen,
- im Falle dass ein zweites Zugriffstoken in dem Mobilfunkgerät (100, 800, 802) gespeichert ist, Lesen des mit dem zweiten Zugriffstoken verknüpft Nutzungszähler, wobei das zweite Zugriffstoken nur dann gültig ist, wenn der Nutzungszähler einen vordefinierten Grenzwert nicht erreicht hat.

6. Verfahren nach einem der vorhergehenden Ansprüche, wobei das Zugriffstoken ein aus einem an das Mobilfunkgerät (100, 800, 802) gesendeten permanenten Zertifikat des Terminals (118) abgeleiteter Hash-Wert ist, wobei der abgeleitete Hash-Wert insbesondere einen Hash von Metadaten des permanenten Zertifikats umfasst.

7. Verfahren nach einem der vorhergehenden Ansprüche, wobei das Verfahren ferner umfasst:

- Senden eines Zertifikats des Mobilfunkgeräts (100, 800, 802) an das Terminal (118),
- Verifizieren des Zertifikats, wobei die Authentisierung des Mobilfunkgeräts (100, 800, 802) gegenüber dem Terminal (118) unter der Voraussetzung eines positiven Verifizierens des Zertifikats erfolgt,

wobei das Verifizieren des Zertifikats des Mobilfunkgeräts (100, 800, 802) ferner insbesondere umfasst:

- Auslesen einer Sperr-ID aus dem Zertifikat des Mobilfunkgeräts (100, 800, 802) durch das Terminal (118),
- Senden einer Speeranfrage von dem Terminal (118) an einen Sperrserver (150, 151),
- Senden einer Sperrinformation von dem Sperrserver (150, 151) an das Terminal (118), wobei ein Zugriff des Terminals (118) auf das Attribut (112) nur unter der Voraussetzung erfolgt, dass die Sperrinformation anzeigt, dass das Mobilfunkgerät (100, 800, 802) nicht gesperrt ist.

8. System, welches umfasst:
ein Mobilfunkgerät (100, 800, 802) mit einer ersten Kommunikationsschnittstelle (104) einer ersten Mobilfunkschnittstelle (105), einem ersten Prozessor (102) und einem ersten computerlesbaren Speichermedium (106), wobei das erste Speichermedium (106) eine Applikation (108) mit computerlesbaren ersten Instruktionen enthält, welche bei Ausführung durch den ersten Prozessor (102) die Durchführung der Verfahrensschritte des Mobilfunkgeräts (100, 800, 802) nach einem der vorhergehenden Ansprüche bewirken, wobei es sich bei dem ersten computerlesbaren Speichermedium (106) um ein Sicherheitsmodul (852) handelt, auf welchem das Chipkartenbetriebssystem installiert ist, und wobei es sich bei der Applikation (108) um eine Chipkartenapplikation (108) handelt,

ein Terminal (118) mit einer zweiten Kommunikationsschnittstelle (122), einem zweiten Prozessor (120) und einem zweiten computerlesbaren Speichermedium (128), wobei das zweite Speichermedium (128) computerlesbare zweite Instruktionen (124) enthält, welche bei Ausführung durch den zweiten Prozessor (120) die Durchführung der Verfahrensschritte des Terminals (118) nach einem der Ansprüche 1 bis 7 bewirken, und einen Fernwartungsserver (920) mit einer zweiten Mobilfunkschnittstelle (930), einem fünften Prozessor (940) und einem fünften computerlesbaren Speichermedium (950), wobei das fünfte Speichermedium (950) ein Fernwartungsmodul (954) umfasst, welches dazu konfiguriert ist, Einstellungen und/oder Programme des Mobilfunkgeräts (100, 804) über ein Mobilfunknetz (900) zu konfigurieren, wobei das Fernwartungsmodul (954) zum Provisionieren der dem Mobilfunkgerät (100, 804) zugeordneten kryptographischen Schlüssel über eine Mobilfunknummer konfiguriert ist, welche dem provisionierenden Fernwartungsserver (920) bekannt ist.

9. System nach Anspruch 8, wobei das System ferner einen Authentisierungsserver (150) mit einer dritten Kommunikationsschnittstelle (154), einem dritten Prozessor (152) und einem dritten computerlesbaren Speichermedium (156) umfasst, wobei das dritte Speichermedium (156) computerlesbare dritte Instruktionen (158) enthält, welche bei Ausführung durch den dritten Prozessor (152) die Durchführung der Verfahrensschritte des Authentisierungsservers (150) nach Anspruch 2 bewirken.

**EP 3 699 791 B1**

10. System nach einem der Ansprüche 8 oder 9, wobei das System ferner einen Sperrserver (150, 151) mit einer vierten Kommunikationsschnittstelle (154, 155), einem vierten Prozessor (152, 153) und einem vierten computerlesbaren Speichermedium (156, 157) umfasst, wobei das vierte Speichermedium (156, 157) computerlesbare vierte Instruktionen (158, 159) enthält, welche bei Ausführung durch den vierten Prozessor (152, 153) eine Sperrliste (162) bereitstellt.

11. Verfahren zur Freigabe eines Zugriffs auf eine zugriffsbeschränkte Sicherungseinrichtung (144), wobei das Verfahren umfasst:

- Durchführen des Verfahrens nach einem der vorhergehenden Ansprüche 1 bis 7,
- nach Freigabe des Zugriffs des Terminals (118) auf das Attribut (112), Lesen des Attributs (112) durch das Terminal (118) und versenden einer Zugriffsanfrage an einen Zugangsmanagementserver (130), wobei die Zugriffsanfrage das Attribut (112) verschlüsselt umfasst,
- Entschlüsseln und Verifizieren des Attributs (112) durch den Zugangsmanagementserver (130), wobei der Zugangsmanagementserver (130) im Falle eines erfolgreichen Verifizierens den Zugang zu der Sicherungseinrichtung (144) freigibt.

12. Sicherheitssystem umfassend ein System nach einem der Ansprüche 8 bis 10, sowie eine zugriffsbeschränkte Sicherungseinrichtung (144) und einen Zugangsmanagementserver (130),

- wobei das Terminal (118) dazu konfiguriert ist, nach Freigabe des Zugriffs des Terminals (118) auf das Attribut (112) das Attribut (112) zu lesen und eine Zugriffsanfrage an den Zugangsmanagementserver (130) zu versenden, wobei die Zugriffsanfrage das Attribut (112) verschlüsselt umfasst,
- wobei der Zugangsmanagementserver (130) dazu konfiguriert ist, eine Entschlüsselung und Überprüfung des Attributs (112) durchzuführen und im Fall einer erfolgreichen Überprüfung den Zugang zu der Sicherungseinrichtung (144) freizugeben.

13. Sicherheitssystem nach Anspruch 12, wobei die Sicherungseinrichtung (144) ferner eine Zugangskontrolleinrichtung mit einer Verriegelungsanlage umfasst und die Sicherungseinrichtung dazu konfiguriert ist auf eine Freigabe des Zugangs zu der Sicherungseinrichtung hin die Verriegelungsanlage der Zugangskontrolleinrichtung zu entriegeln.

**Claims**

1. Method for controlling access of a terminal (118) to an attribute (112) stored in a mobile phone (100, 800, 802), wherein the mobile phone (100, 800, 802) comprises a first mobile radio interface (105), a first communication interface (104), and an application (108) which is configured to control the mobile phone (100, 800, 802) in order to carry out the method, wherein the method comprises authentication of the terminal (118) by the mobile phone (100, 800, 802) and authentication of the mobile phone (100, 800, 802) by the terminal (118), wherein the mobile phone (100, 800, 802) comprises a chip card operating system, and wherein the application (108) is a chip card application which is executable on the chip card operating system, wherein the chip card operating system is installed on a security module (850) of the mobile phone (100, 800, 802) and the chip card application (108) is executed on the chip card operating system of the security module (850), wherein the authentication of the terminal (118) by the mobile phone (100, 800, 802) comprises:

- sending a first access token from the terminal (118) to the mobile phone (100, 800, 802),
- verifying, by the mobile phone (100, 800, 802), a first signature of the first access token using a static public key associated with the terminal (118),
- generating and sending a session-based temporary public key by the terminal (118) to the mobile phone (100, 800, 802),
- generating and sending a random first secret by the mobile phone (100, 800, 802) to the terminal (118),
- creating a second signature of the random first secret using a static private key (160) associated with the terminal (118) and using the session-based temporary public key of the terminal (118),
- sending the second signature by the terminal (118) to the mobile phone (100, 800, 802),
- verifying the second signature of the random first secret by the mobile phone (100, 800, 802) using the random first secret, the session-based temporary public key of the terminal (118) and the static public key associated with the terminal (118),
- following successful verification of the first and second signature, releasing the access of the terminal (118)

27

to the attribute (112),

wherein the access of the terminal (118) to the attribute (112) is provided only on the condition of successful authentication of the mobile phone (100, 800, 802) by the terminal (118),
wherein the authentication of the mobile phone (100, 800, 802) comprises:

- sending, to the terminal (118), a public key of the mobile phone (100, 804) and a domain parameter associated with the public key,
- calculating, by the mobile phone (100, 804), a second secret, which is common to the mobile phone (100, 804) and the terminal (118), from a private key of the mobile phone (100, 804), the session-based temporary public key of the terminal (118), and the domain parameter,
- calculating, by the terminal (118), the common second secret from the public key of the mobile phone (100, 804), the session-based temporary private key of the terminal (118), and the domain parameter,
- generating a random third secret by the mobile phone (100, 804),
- sending the random third secret to the terminal (118), and
- generating, by the mobile phone (100, 804) and the terminal (118), a symmetric session key from the third secret and the common second secret,

wherein the subsequent communication, with the access to the attribute (112), occurs in an encrypted manner by the symmetric session key,
wherein the mobile phone (100, 804) communicates by means of its mobile radio interface (105) via a digital cellular mobile phone network (900) with a remote maintenance server (920), which provisions the cryptographic key, which comprises the private key of the mobile phone (100, 804) and is associated with the mobile phone, via a mobile phone number of the mobile phone (100, 804) known to the remote maintenance server (920).

2. Method according to claim 1, wherein the second signature of the random first secret is created by the terminal (118), or

wherein the terminal (118) is authenticated by the mobile phone (100, 800, 802) via an authentication server (150) which comprises the static private key (160) associated with the terminal (118),
wherein the terminal (118) forwards the random first secret to the authentication server (150) and sends the session-based temporary public key of the terminal (118) to the authentication server (150), wherein the second signature of the random first secret is created by the authentication server (150),
wherein the authentication server (150) sends the second signature to the terminal (118).

3. Method according to any of the preceding claims, wherein the first access token is stored as a valid access token in the mobile phone (100, 800, 802) in response to successful verification of the first and second signature.

4. Method according to any of the preceding claims, wherein the authentication by the mobile phone (100, 800, 802) in response to the receipt of the first access token comprises an automatic check to ascertain whether a valid second access token matching the received first access token is stored in the mobile phone (100, 800, 802), wherein, in the event that a valid second access token is stored in the mobile phone (100, 800, 802), access of the terminal (118) to the attribute (112) stored in the mobile phone (100, 800, 802) is enabled, wherein, in the event that there is no valid second access token stored in the mobile phone (100, 800, 802), the terminal (118) is authenticated by the mobile phone (100, 800, 802).

5. Method according to any of the preceding claims, wherein the access token comprises access permission, and wherein the method further comprises:

- in the event that there is no valid second access token stored in the mobile phone (100, 800, 802), and following the successful verification of the first and second signature, linking and storing the access permission with the first access token in the mobile phone (100, 800, 802), wherein the access of the terminal (118) to the attribute (112) is enabled in accordance with the access permission,
- in the event that a valid second access token is stored in the mobile phone (100, 800, 802), reading the access permission stored so as to be linked to the second access token, wherein the access of the terminal (118) to the attribute (112) is enabled in accordance with the access permission, and/or

wherein the method further comprises:

- in the event that there is no valid second access token stored in the mobile phone (100, 800, 802), and following the successful verification of the first and second signature, linking and storing the static public key of the terminal (118) with the first access token in the mobile phone (100, 800, 802), wherein further communication with the terminal (118) occurs in an encrypted manner with the use of the static public key of the terminal (118),

- in the event that a valid second access token is stored in the mobile phone (100, 800, 802), reading the static public key of the terminal (118) stored so as to be linked with the access token, wherein further communication with the terminal (118) occurs in an encrypted manner with the use of the static public key of the terminal (118), and/or

wherein the method further comprises:

- in the event that there is no valid second access token stored in the mobile phone (100, 800, 802), and following successful verification of the first and second signature, generating and linking a timestamp with the access token in the mobile phone (100, 800, 802), wherein the timestamp specifies a maximum period of validity of the access token,

- in the event that a second access token is stored in the mobile phone (100, 800, 802), reading the timestamp stored so as to be linked with the second access token, wherein the second access token is valid only if the timestamp is valid, and/or

wherein the method further comprises,

- in the event that there is no valid second access token stored in the mobile phone (100, 800, 802), and following successful verification of the first and second signature, generating and linking a use counter with the access token in the mobile phone (100, 800, 802), wherein the use counter is configured to count the number of uses of the access token in order to enable access of the terminal (118) to the attribute (112),

- in the event that a second access token is stored in the mobile phone (100, 800, 802), reading the use counter linked with the second access token, wherein the second access token is valid only if the use counter has not reached a predefined limit value.

6. Method according to any of the preceding claims, wherein the access token is a hash value derived from a permanent certificate of the terminal (118) sent to the mobile phone (100, 800, 802), wherein the derived hash value in particular comprises a hash of metadata of the permanent certificate.

7. Method according to any of the preceding claims, wherein the method further comprises:

- sending a certificate of the mobile phone (100, 800, 802) to the terminal (118),
- verifying the certificate, wherein the mobile phone (100, 800, 802) is authenticated to the terminal (118) on the condition of a positive verification of the certificate,

wherein the verification of the certificate of the mobile phone (100, 800, 802) further comprises, in particular:

- reading a lock ID from the certificate of the mobile phone (100, 800, 802) by the terminal (118),
- sending a lock request from the terminal (118) to a lock server (150, 151),
- sending lock information from the lock server (150, 151) to the terminal (118), wherein access of the terminal (118) to the attribute (112) is provided only on the condition that the lock information indicates that the mobile phone (100, 800, 802) is not locked.

8. System comprising:

a mobile phone (100, 800, 802) comprising a first communication interface (104) of a first mobile radio interface (105), a first processor (102), and a first computer-readable storage medium (106), wherein the first storage medium (106) contains an application (108) having first computer-readable instructions, which, when executed by the first processor (102), cause the method steps for the mobile phone (100, 800, 802) to be carried out according to any of the preceding claims,

wherein the first computer-readable storage medium (106) is a security module (852) on which the chip card operating system is installed, and wherein the application (108) is a chip card application (108),

a terminal (118) comprising a second communication interface (122), a second processor (120), and a second computer-readable storage medium (128), wherein the second storage medium (128) contains second computer-readable instructions (124) which, when executed by the second processor (120), cause the method steps for the terminal (118) to be carried out according to any of claims 1 to 7, and

a remote maintenance server (920) comprising a second mobile radio interface (930), a fifth processor (940), and a fifth computer-readable storage medium (950), wherein the fifth storage medium (950) comprises a remote maintenance module (954) which is configured to configure settings and/or programs of the mobile phone (100, 804) via a mobile phone network (900), wherein the remote maintenance module (954) is configured to provision the cryptographic key associated with the mobile phone (100, 804) via a mobile phone number known to the provisioning remote maintenance server (920).

9. System according to claim 8, wherein the system further comprises an authentication server (150) comprising a third communication interface (154), a third processor (152), and a third computer-readable storage medium (156), wherein the third storage medium (156) contains third computer-readable instructions (158) which, when executed by the third processor (152), cause the method steps for the authentication server (150) to be carried out according to claim 2.

10. System according to any of claims 8 or 9, wherein the system further comprises a lock server (150, 151) comprising a fourth communication interface (154, 155), a fourth processor (152, 153), and a fourth computer-readable storage medium (156, 157), wherein the fourth storage medium (156, 157) contains fourth computer-readable instructions (158, 159) which provide a lock list (162) when executed by the fourth processor (152, 153).

11. Method for enabling access to an access-restricted securing device (144), wherein the method comprises:

- carrying out the method according to any of the preceding claims 1 to 7,
- following the access of the terminal (118) to the attribute (112) being enabled, reading the attribute (112) by the terminal (118), and sending an access request to an access management server (130), wherein the access request comprises the attribute (112) in encrypted form,
- decrypting and verifying the attribute (112) by the access management server (130), wherein the access management server (130), in the event of successful verification, enables access to the securing device (144).

12. Security system comprising a system according to any of claims 8 to 10, and an access-restricted securing device (144) and an access management server (130),

- wherein the terminal (118) is configured, following the access of the terminal (118) to the attribute (112) being enabled, to read the attribute (112) and to send an access request to the access management server (130), wherein the access request comprises the attribute (112) in encrypted form,
- wherein the access management server (130) is configured to decrypt and check the attribute (112) and to enable the access to the securing device (144) in the event of a successful check.

13. Security system according to claim 12, wherein the securing device (144) also comprises an access control device having a locking facility and the securing device is configured to unlock the locking facility of the access control device when the access to the securing device is enabled.

**Revendications**

1. Procédé de contrôle d'un accès d'un terminal (118) à un attribut (112) stocké dans un appareil radio mobile (100, 800, 802), dans lequel l'appareil radio mobile (100, 800, 802) comprend une première interface radio mobile (105), une première interface de communication (104) et une application (108), qui est conçue pour commander l'appareil radio mobile (100, 800, 802) pour l'exécution du procédé, où le procédé comprend une authentification du terminal (118) par l'appareil radio mobile (100, 800, 802) et une authentification de l'appareil radio mobile (100, 800, 802) par le terminal (118),

dans lequel l'appareil radio mobile (100, 800, 802) comprend un système d'exploitation de carte à puce et dans lequel, dans le cas de l'application (108), il s'agit d'une application de carte à puce qui est exécutable sur le système d'exploitation de carte à puce , où le système d'exploitation de carte à puce est installé sur un module de sécurité (850) de l'appareil radio mobile (100, 800, 802) et l'application de carte à puce (108) est exécutée sur le système d'exploitation de carte à puce du module de sécurité (850),
dans lequel l'authentification du terminal (118) par l'appareil radio mobile (100, 800, 802) comprend :

- l'envoi d'un premier jeton d'accès du terminal (118) à l'appareil radio mobile (100, 800, 802),
- la vérification d'une première signature du premier jeton d'accès avec une clé publique statique associée au terminal (118) par l'appareil radio mobile (100, 800, 802),
- la création et l'envoi d'une clé publique temporaire spécifique pour la session par le terminal (118) à l'appareil radio mobile (100, 800, 802),
- la création et l'envoi d'un premier secret aléatoire par l'appareil radio mobile (100, 800, 802) au terminal (118),
- l'établissement d'une deuxième signature du premier secret aléatoire avec une clé privée statique (160) associée au terminal (118) et la clé publique temporaire spécifique pour la session du terminal (118),
- l'envoi de la deuxième signature par le terminal (118) à l'appareil radio mobile (100, 800, 802),
- la vérification de la deuxième signature du premier secret aléatoire par l'appareil radio mobile (100, 800, 802) moyennant l'emploi du premier secret aléatoire, de la clé publique temporaire spécifique pour la session du terminal (118) et de la clé publique statique associée au terminal (118),
- après une vérification réussie des première et deuxième signatures, la libération de l'accès du terminal (118) à l'attribut (112),

où l'accès du terminal (118) à l'attribut (112) n'a lieu uniquement à la condition d'une authentification réussie de l'appareil radio mobile (100, 800, 802) par le terminal (118), dans lequel l'authentification de l'appareil radio mobile (100, 800, 802) comprend :

- l'envoi d'une clé publique de l'appareil radio mobile (100, 804) et d'un paramètre de domaine associé à la clé publique au terminal (118),
- le calcul d'un deuxième secret commun à l'appareil radio mobile (100, 804) et au terminal (118) à partir d'une clé privée de l'appareil radio mobile (100, 804), de la clé publique temporaire spécifique pour la session du terminal (118) et du paramètre de domaine par l'appareil radio mobile (100, 804),
- le calcul du deuxième secret commun à partir de la clé publique de l'appareil radio mobile (100, 804), de la clé privée temporaire spécifique pour la session du terminal (118) et du paramètre de domaine par le terminal (118),
- la création d'un troisième secret aléatoire par l'appareil radio mobile (100, 804),
- l'envoi du troisième secret aléatoire au terminal (118), et
- la création d'une clé de session symétrique à partir du troisième secret et du deuxième secret commun par l'appareil radio mobile (100, 804) et le terminal (118),

où la communication suivante a lieu chiffrée avec la clé de session symétrique avec l'accès à l'attribut (112), dans lequel l'appareil radio mobile (100, 804) communique au moyen de son interface radio mobile (105) via un réseau radio mobile (900) cellulaire numérique avec un serveur de maintenance à distance (920), lequel fournit la clé cryptographique associée à l'appareil radio mobile (100, 804) comprenant la clé privée de l'appareil radio mobile, par le biais d'un numéro radio de l'appareil radio mobile (100, 804) connu par le serveur de maintenance à distance (920).

2. Procédé selon la revendication 1, dans lequel l'établissement de la deuxième signature du premier secret aléatoire a lieu par le terminal (118), ou
   dans lequel l'authentification du terminal (118) par l'appareil radio mobile 100, 800, 802) a lieu par le biais d'un serveur d'authentification (150), lequel comprend la clé privée (160) statique associée au terminal (118),

   dans lequel le terminal (118) transmet le premier secret aléatoire au serveur d'authentification (150) et envoie la clé publique temporaire spécifique pour la session du terminal (118) au serveur d'authentification (150),
   dans lequel l'établissement de la deuxième signature du premier secret aléatoire a lieu par le serveur d'authentification (150),
   dans lequel le serveur d'authentification (150) envoie la deuxième signature au terminal (118).

3. Procédé selon l'une des revendications précédentes, dans lequel le premier jeton d'accès est enregistré en tant que jeton d'accès valide dans l'appareil radio mobile (100, 800, 802) suite à une vérification réussie des première et deuxième signatures.

4. Procédé selon l'une des revendications précédentes, dans lequel l'authentification par l'appareil radio mobile (100, 800, 802), suite à la réception du premier jeton d'accès, comprend une vérification automatique si un deuxième jeton d'accès valide correspondant au premier jeton d'accès reçu est enregistré dans l'appareil radio mobile (100, 800, 802), où, dans le cas où un deuxième jeton d'accès valide est enregistré dans l'appareil radio mobile (100, 800, 802), il y a une libération d'un accès du terminal (118) à l'attribut (112) enregistré dans l'appareil radio mobile (100, 800, 802), où, dans le cas où aucun deuxième jeton d'accès valide n'est enregistré dans l'appareil radio mobile (100, 800, 802), l'authentification du terminal (118) a lieu par l'appareil radio mobile (100, 800, 802).

5. Procédé selon l'une des revendications précédentes, dans lequel le jeton d'accès comprend une autorisation d'accès et où le procédé comprend en outre :

    - dans le cas où aucun deuxième jeton d'accès valide n'est enregistré dans l'appareil radio mobile -(100, 800, 802), après la vérification réussie des première et deuxième signatures, la combinaison et l'enregistrement de l'autorisation d'accès avec le premier jeton d'accès dans l'appareil radio mobile (100, 800, 802), où il y a une libération de l'accès du terminal (118) à l'attribut (112) de manière correspondante à l'autorisation d'accès,
    - dans le cas ou un deuxième jeton d'accès valide est enregistré dans l'appareil radio mobile (100, 800, 802), la lecture de l'autorisation d'accès enregistrée combinée avec le deuxième jeton d'accès, où une libération de l'accès du terminal (118) à l'attribut (112) a lieu de manière correspondante à l'autorisation d'accès, et/ou

où le procédé comprend en outre :

    - dans le cas où aucun deuxième jeton d'accès valide n'est enregistré d'accès dans l'appareil radio mobile (100, 800, 802), après la vérification réussie des première et deuxième signatures, la combinaison et l'enregistrement de la clé publique statique du terminal (118) avec le premier jeton d'accès dans l'appareil radio mobile (100, 800, 802), où il y a une nouvelle communication avec le terminal (118) à l'état chiffré moyennant l'emploi de la clé publique statique du terminal (118),
    - dans le cas ou un deuxième jeton d'accès valide est enregistré dans l'appareil radio mobile (100, 800, 802), la lecture de la clé publique statique du terminal (118) enregistrée combinée avec le jeton d'accès, où il y a une nouvelle communication avec le terminal (118) chiffrée moyennant l'emploi de la clé publique statique du terminal (118), et/ou

où le procédé comprend en outre :

    - dans le cas où aucun deuxième jeton d'accès valide n'est enregistré d'accès dans l'appareil radio mobile (100, 800, 802), après la vérification réussie des première et deuxième signatures, la création et la combinaison d'une estampille temporelle avec le jeton d'accès dans l'appareil radio mobile (100, 800, 802), où l'estampille temporelle indique une durée de validité maximale du jeton d'accès,
    - dans le cas où un deuxième jeton d'accès valide est enregistré dans l'appareil radio mobile (100, 800, 802), la lecture de l'estampille temporelle combinée chiffrée avec le deuxième jeton d'accès, où le deuxième jeton d'accès n'est valable que si l'estampille temporelle est valide, et/ou

où le procédé comprend en outre :

    - dans le cas où aucun deuxième jeton d'accès valide n'est enregistré d'accès dans l'appareil radio mobile (100, 800, 802), après la vérification réussie des première et deuxième signatures, la création et la combinaison d'un compteur d'utilisations avec le jeton d'accès dans l'appareil radio mobile (100, 800, 802), où le compteur d'utilisations est conçu pour compter le nombre d'utilisations du jeton d'accès pour la libération de l'accès du terminal (118) à l'attribut (112),
    - dans le cas où un deuxième jeton d'accès valide est enregistré dans l'appareil radio mobile (100, 800, 802), la lecture du compteur d'utilisations combiné avec le deuxième jeton d'accès, où le deuxième jeton d'accès n'est valide que si le compteur d'utilisation n'a pas atteint une valeur limite prédéfinie.

6. Procédé selon l'une des revendications précédentes, dans lequel le jeton d'accès est une valeur de hachage dérivée d'un certificat permanent du terminal (118) envoyé à l'appareil radio mobile (100, 800, 802), où la valeur de hachage dérivée comprend en particulier un hachage de métadonnées du certificat permanent.

7. Procédé selon l'une des revendications précédentes, où le procédé comprend en outre :

    - l'envoi d'un certificat de l'appareil radio mobile (100, 800, 802) au terminal (118),
    - la vérification du certificat, où l'authentification de l'appareil radio mobile (100, 800, 802)

vis-à-vis du terminal (118) a lieu à condition qu'il y ait une vérification du certificat, dans lequel la vérification du certificat de l'appareil radio mobile (100, 800, 802) comprend en outre en particulier :

- la lecture d'un ID de blocage à partir du certificat de l'appareil radio mobile (100, 800, 802) par le terminal (118),
- l'envoi d'une demande de blocage du terminal (118) à un serveur de blocage (151),
- l'envoi d'une information de blocage du serveur de blocage (150, 151) au terminal (118), où un accès du terminal (118) à l'attribut (112) n'a lieu qu'à la condition que l'information de blocage indique que l'appareil radio mobile (100, 800, 802) n'est pas bloqué.

8. Système, lequel comprend :

un appareil radio mobile (100, 800, 802) pourvu d'une première interface de communication (104) d'une première interface radio mobile (105), d'un premier processeur (102) et d'un premier support de stockage (106) lisible par ordinateur, où le premier support de stockage (106) contient une application (108) avec des premières instructions lisibles par ordinateur, lesquelles, lors d'une réalisation par le premier processeur (102), provoquent l'exécution des étapes de procédé de l'appareil radio mobile (100, 800, 802) selon l'une des revendications précédentes,
dans lequel, dans le cas du premier support de stockage (106) lisible par ordinateur, il s'agit d'un module de sécurité (852) sur lequel le système d'exploitation de carte à puce est installé, et dans lequel, dans le cas de l'application (108), il s'agit d'une application de carte à puce (108),
un terminal (118) pourvu d'une deuxième interface de communication (122), d'un deuxième processeur (120) et d'un deuxième support de stockage (128) lisible par ordinateur, où le deuxième support de stockage (128) contient des deuxièmes instructions (124) lisibles par ordinateur, lesquelles, lors d'une réalisation par le deuxième processeur (120), provoquent l'exécution des étapes de procédé du terminal (118) selon l'une des revendications 1 à 7, et
un serveur de maintenance à distance (920) pourvu d'une deuxième interface radio mobile (930), d'un cinquième processeur (940) et d'un cinquième support de stockage (950) lisible par ordinateur, où le cinquième support de stockage (950) comprend un module de maintenance à distance (954), lequel est conçu pour configurer des réglages et/ou des programmes de l'appareil radio mobile (100, 804) par le biais d'un réseau radio mobile (900), où le module de maintenance à distance (954) est conçu pour la fourniture de la clé cryptographique associée à l'appareil radio mobile (100, 804) par le biais d'un numéro radio mobile, lequel est connu par le serveur de maintenance à distance (920) le fournissant.

9. Système selon la revendication 8, où le système comprend en outre un serveur d'authentification (150) pourvu d'une troisième interface de communication (154), d'un troisième processeur (152) et d'un troisième support de stockage (156) lisible par ordinateur, où le troisième support de stockage (156) contient des troisièmes instructions (158) lisibles par ordinateur, lesquelles, lors d'une réalisation par le troisième processeur (152), provoquent l'exécution des étapes de procédé du serveur d'authentification (150) selon la revendication 2.

10. Système selon l'une des revendications 8 ou 9, le système comprenant en outre un serveur de blocage (150, 151) pourvu d'une quatrième interface de communication (154, 155), d'un quatrième processeur (152, 153) et d'un quatrième support de stockage (156, 157) lisible par ordinateur, où le quatrième support de stockage (156, 157) contient des quatrièmes instructions (158, 159) lisibles par ordinateur, lesquelles, lors de la réalisation par le quatrième processeur (152, 153), procurent une liste de blocage (162).

11. Procédé de libération d'un accès à un dispositif de sécurité (144) à accès restreint, le procédé comprenant :

- l'exécution du procédé selon l'une des revendications précédentes 1 à 7,
- après la libération de l'accès du terminal (118) à l'attribut (112), la lecture de l'attribut (112) par le terminal (118) et l'envoi d'une demande d'accès à un serveur gestionnaire d'accès (130), où la demande d'accès comprend l'attribut (112) à l'état chiffré,
- le déchiffrement et la vérification de l'attribut (112) par le serveur gestionnaire d'accès (130), où le serveur gestionnaire d'accès (130), dans le cas d'une vérification réussie, libère l'accès vers le dispositif de sécurité (144).

12. Système de sécurité comprenant un système selon l'une des revendications 8 à 10 ainsi qu'un dispositif de sécurité (144) à accès restreint et un serveur gestionnaire d'accès (130),

- dans lequel le terminal (118) est conçu pour, après la libération de l'accès du terminal (118) à l'attribut (112), lire l'attribut (112) et envoyer une demande d'accès au serveur gestionnaire d'accès (130), où la demande d'accès comprend l'attribut (112) à l'état chiffré,

- dans lequel le serveur gestionnaire d'accès (130) est conçu pour exécuter un déchiffrement et une vérification de l'attribut (112) et dans le cas d'une vérification réussie, libérer l'accès vers le dispositif de sécurité (144).

13. Système de sécurité selon la revendication 12, dans lequel le dispositif de sécurité (144) comprend en outre un dispositif de contrôle d'accès avec une installation de verrouillage et le dispositif de sécurité est conçu pour, suite à une libération de l'accès vers le dispositif de sécurité, déverrouiller l'installation de verrouillage du dispositif de contrôle d'accès.

Fig. 1

Fig. 2

Fig. 3

Empfang permanentes
Zertifikat des Terminals

400

Ableiten Hash-Wert

402

Ja ⟨ Gültiger Hash
gespeichert ? ⟩

404 Nein

Verifizierung
permanentes Zertifikat

406

Ableiten erste Signatur

408

⟨ Signatur gültig ? ⟩ Nein ⊗

410 Ja 411

Empfang sitzgebundener
Schlüssel

412

Erzeugen und Senden
Geheimnis

414

Weiterleiten Geheimnis,
Senden sitzungsgebundener
Schlüssel

415

Erzeugen und Senden
zweite Signatur

416

Weiterleiten zweite
Signatur

417

Empfang und Verifizierung
zweite Signatur

418

Speichern Hash-Wert,
Metadaten,
permanenter
öffentlicher Schlüssel,
Zeitstempel

419

Freigabe Zugriff
auf Attribut

420

Senden permanentes
Zertifikat des ID-Tokens

421

Verifizierung permanentes
Zertifikat

422

Senden öffentlicher
Schlüssel ID-Token und
Domain Parameter

423

Berechnen zweites
Geheimnis

424

Erzeugen drittes
Geheimnis

426

Senden drittes
Geheimnis an Terminal

428

Erzeugung
Sitzungsschlüssel

430

Verschlüsselter Zugriff
auf Attribut

432

Fig. 4

38

Empfang permanentes
Zertifikat des Terminals

520

Freigabe Zugriff
auf Attribut

Ableiten Hash-Wert

Ja

Gültiger Hash
gespeichert ?

Nein

521

Senden permanentes
Zertifikat des ID-Tokens

522

Verifizierung permanentes
Zertifikat

Verifizierung
permanentes Zertifikat

Ableiten erste Signatur

523

Senden öffentlicher
Schlüssel ID-Token und
Domain Parameter

Signatur gültig ?

Nein

511

524

Berechnen zweites
Geheimnis

Empfang sitzgebundener
Schlüssel

Ja

Erzeugen und Senden
Geheimnis

526

Erzeugen drittes
Geheimnis

Erzeugen und Senden
zweite Signatur

528

Senden drittes
Geheimnis an Terminal

Empfang und Verifizierung
zweite Signatur

530

Erzeugung
Sitzungsschlüssel

Speichern Hash-Wert,
Metadaten,
permanenter
öffentlicher Schlüssel,
Zeitstempel

532

Verschlüsselter Zugriff
auf Attribut

Fig. 5

**Fig. 6**

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 17170148 A
- DE 102014204252 A1
- DE 102011082101
- WO 2010145979 A1

**In der Beschreibung aufgeführte Nicht-Patentliteratur**

- Mobile Authentisierung mit dem neuen Personalausweis (MONA). **VON MORITZ HORSCH.** Master-Thesis. Technische Universität Darmstadt, Juli 2011
- Advanced Security Mechanisms for Machine Readable Travel Documents and eIDAS Token. *TR-03110-1*
- Can Hand-Held Computers Still Be Better Smart Cards?. **VON SANDEEP TAMRAKAR et al.** IN-TRUST 2010. LNCS, 2011, vol. 6802, 200-218